# EUROPÄISCHE PATENTSCHRIFT

(11) **EP 2 297 507 B1**
(45) Veröffentlichungstag und Bekanntmachung des Hinweises auf die Patenterteilung: **16.11.2016**
(21) Anmeldenummer: 09780345.6
(22) Anmeldetag: 09.07.2009
(51) Int. Cl.: F16L 59/065, B01J 20/04, B01J 20/08, B01J 20/10, B01J 20/18, B01J 20/32, C01B 3/00, E04B 1/80

(54) **BAUTEIL ZUR HERSTELLUNG VON VAKUUMISOLATIONSSYSTEMEN**
COMPONENT FOR PRODUCING VACUUM INSULATION SYSTEMS
COMPOSANT POUR LA FABRICATION DE SYSTÈMES D'ISOLATION SOUS VIDE

(30) Priorität: 11.07.2008 DE 102008040367
(43) Veröffentlichungstag der Anmeldung: 23.03.2011
(73) Patentinhaber: Evonik Degussa GmbH, 45128 Essen (DE)
(72) Erfinder: MARKOWZ, Georg, 63755 Alzenau (DE); SCHULTZ, Thorsten, 64739 Hassenroth (DE); TSCHERNJAEW, Juri, 63743 Aschaffenburg (DE); USMANOV, Farid, 68163 Mannheim (DE); PISULA, Wojciech, 55118 Mainz (DE); SCHÜTTE, Rüdiger, 63755 Alzenau-Hörstein (DE)
(86) Internationale Anmeldenummer: PCT/EP2009/058710
(87) Internationale Veröffentlichungsnummer: WO 2010/003993

(56) Entgegenhaltungen:
- EP-A1- 1 835 221
- DE-A1- 10 107 651
- DE-C1- 4 016 048
- FR-A1- 2 573 820

## Beschreibung

Die vorliegende Erfindung betrifft ein Bauteil zur Herstellung von Vakuumisolationssystemen. Darüber hinaus beschreibt die vorliegende Erfindung Isolationssysteme, die ein erfindungsgemäßes Bauteil umfassen oder aus diesem erhältlich sind, sowie ein Verfahren zur Erzeugung von Vakuum (siehe, zum Beispiel, das Dokument EP 1 835 221).

Im Zuge sich verknappender fossiler Energieressourcen und sich verschärfender Klimaschutznotwendigkeiten gewinnen energiesparende Technologien und der wirtschaftliche Energietransport sowie die Zwischenspeicherung von ressourcenschonend gewonnener Nutzenergie zunehmende Bedeutung. Ein wichtiger Aspekt hierbei besteht in der Verbesserung von Isolationsmaterialien, die seit langem in vielen Feldern eingesetzt werden.

Fernwärme- bzw. sonstige Wärmeträgersysteme transportieren Wärme mittels geeigneter Trägermedien (meist Thermoöl, Wasser oder Heißdampf) von einem Erzeuger zu einem Verbraucher. Bedingt durch die hohen Investitionskosten und die Wärmeverluste auf diesem Transportweg sind solche Systeme auf dem gegenwärtigen Stand der Technik nur für vergleichsweise kurze Transportwege wirtschaftlich (typisch < 20 km Distanz zwischen Erzeuger und Verbraucher). Konventionelle Systeme bedienen sich zur Leitungsisolation entweder verschiedener Fasermaterialien (Glas-/Steinwolle, teilweise imprägniert mit Isolationspulvern und/oder Russ) oder aber Isolationsschäumen (zumeist basierend auf Polyurethan). In allen Fällen herrscht im Porenraum Atmosphärendruck. Der Wärmeverlust in modernen Netzen liegt - abhängig vom Leitungsquerschnitt und den Betriebsbedingungen - typischerweise bei ca. 10 - 100 W/(m Leitungslänge). Klassische Vakuumisolationen (z.B. in Form vorisolierter Formkörper oder Rohr-in-Rohr-Technik) werden aufgrund der hohen Investitionskosten und der zu geringen Standzeit des erforderlichen Vakuums bislang nicht eingesetzt.

Alle konventionellen Isolationsmaterialien für Gebäudeisolation (außer Isolierverglasungen) basieren auf porösen Materialien, in deren Porenraum Luft (oder in seltenen Fällen auch andere Gase) bei Atmosphärendruck vorliegen. Damit ist die Isolationsgüte in jedem Fall begrenzt. Konventionelle Vakuumisolationen (VIPs) befinden sich in der Erprobung und Markteinführung, sind jedoch oft noch zu teuer. Vor allem aber sind sie in ihrer Form vorgegeben und können nicht an der Baustelle in ihren Abmessungen an die örtlichen Bedürfnisse angepasst werden. Weder können sie zugeschnitten werden, noch sind sie flexibel genug um sich gekrümmten Oberflächen oder gar Raumecken anpassen zu können. Dies engt Neubauten hinsichtlich Formen und Abmessungen ein, und die Nachrüstung von Altbauten wird durch die geometrische Unflexibilität der VIPs deutlich erschwert.

Darüber hinaus werden Isolationsmaterialien auch zur Herstellung von klassischen Haushaltsgeräten, wie Kühlschränke und Tiefkühltruhen eingesetzt.

In fast allen Bauwerken erfolgt der Transport von heißem Leitungswasser sowie Wasser für Heizungszwecke durch Rohrleitungen, welche typischerweise mittels 10-20mm starker Schaumisolationen thermisch isoliert sind. Die Isolationsleistung solcher Systeme ist jedoch begrenzt, da im Porenraum der Isolationen Atmosphärendruck herrscht. Daher kommt es zu merklichen Wärmeverlusten in die umgebenden Wände, Böden, das Erdreich oder die Umgebungsluft. Diese Verluste sind insbesondere in jenen örtlichen Bereichen kritisch, wo keinerlei Heizwärme benötigt wird, d.h. in Kellerräumen, Außenfassaden, Dachbereichen etc.. Konventionelle Vakuumisolationen sind deutlich zu teuer und unflexibel in der Handhabung. Bei dem aktuellen Trend hin zu leichter und schneller verlegbaren flexiblen Kunststoff-Rohrsystemen auch im Installationsbereich kommen diese Nachteile besonders zum Tragen.

In der Industrie wird sehr viel Energie aufgewendet, um Reaktoren und Apparate aufzuheizen bzw. auf bestimmten Temperaturen zu halten. Konventionell werden solche Anlagen mit einer oder mehreren Lagen Glas-/Steinwolle oder im Hochtemperaturbereich mit porösen keramischen Materialien thermisch isoliert. Aufgrund der oft sehr hohen Temperaturdifferenzen zur Umgebung (oft mehr als 200 Kelvin) kommt es aufgrund der schlechten Isolationswirkung dieser Materialien dennoch zu erheblichen Wärmeverlusten, welche durch Nachheizen ausgeglichen werden müssen. Doppelwand-Technik (analog Dewar-Gefäß) scheidet fast immer aus aufgrund der hohen Investitionskosten, sowie der oft sehr komplexen Geometrie der Apparate (d.h. extremer Herstellaufwand).

Analog klassischer Gebäudeisolationen besteht im Bereich der Kühlgut-Logistik der Bedarf nach Isolationssystemen, welche unerwünschte Wärmeeinträge in gekühlte Räume und Transportbehältnisse minimieren. Konventionelle Isolationen bestehen dort zumeist aus Schäumen oder Fasersystemen, in deren Porenraum Atmosphärendruck herrscht. Damit ist die Isolationsleistung prinzipiell begrenzt. Konventionelle Vakuumisolationssysteme (VIPs) kommen aufgrund deren hohen Kosten sowie deren unflexiblen Verarbeitung nur in ausgewählten Bereichen zum Einsatz.

Darüber hinaus werden Isolationen auch bei der Herstellung von Transportmitteln, insbesondere von Flugzeugen eingesetzt. Aufgrund der großen Temperaturunterschiede zwischen Kabine und Außenbereich (bis zu 100 Kelvin bei Verkehrsflugzeugen, bis zu 300 Kelvin bei Raumfahrzeugen) ist es notwendig, Flugzeug- und Raumschiffinnenräume thermisch gegenüber dem Außenbereich zu isolieren, um den Klimatisierungsaufwand zu begrenzen (Treibstoffersparnis) und um Kondenswasserbildung vorzubeugen. Gleichzeitig muss diese Isolationsschicht schwer entflammbar und leicht sein, sowie vorzugsweise zur mechanischen Steifigkeit der gesamten Hüllen-Konstruktion beitragen. Konventionell werden Isolationsmatten aus Polyimid und anderen Hochleistungs-Kunststoffen (Polyaramid etc.) sowie Isolationsmaterialien auf Glasfaser- und Pulverbasis verwendet. Im Porenraum dieser Materialien herrscht zumeist Kabineninnendruck, d.h. rund 800-1000mbar. Vakuumisolationen werden nur in Ausnahmefällen verwendet, aufgrund des hohen Preises und weil deren Folien-Außenhüllen kaum aus schwer entflammbaren Kunststoffen herstellbar sind.

In all diesen Feldern steigt daher der Bedarf nach leistungsfähigen thermischen Isolationswerkstoffen.

Kostengünstige Isolationsmaterialien isolieren bei Normaldruck, d.h. im Porenraum des Isolationsmaterials herrscht ein Absolutdruck in Höhe des atmosphärischen Luftdruckes. Hierdurch können diese Materialien einfach und sicher verarbeitet werden. Nachteilig ist jedoch, dass die Isolationswirkung, bedingt durch die hohe Wärmetransportleistung von Gasen, relativ gering ist.

Daher wurden Materialien entwickelt, die diesen Wärmetransport durch den Einsatz von Vakuum minimieren. Ein Unterdruck kann jedoch nur innerhalb mechanisch stabiler Systeme erzeugt und aufrecht erhalten werden, so dass ein Kollabieren des unter Vakuum stehenden Systems vermieden werden kann.

Leitungssysteme zum Transport von kalten Flüssigkeiten sind unter anderem in den Dokumenten DE-A-36 30 399, US 4,924,679, DE 692 02 950 T2, DE 195 11 383 A1, DE 196 41 647 C1, DE 695 19 354 T2, DE-A-20 13 983 und WO 2005/043028 dargelegt.

Es werden bislang verschiedene Lösungsansätze für die Isolation solcher Leitungssysteme verfolgt. Ein Teil der zuvor dargelegten Systeme beschreibt Rohrleitungen, die sich durch eine Doppelwandung auszeichnen, worin der zwischen den Wandungen befindliche Hohlraum evakuiert wird und zusätzlich mit Isolationsmaterial (Pulver und/oder Fasern) gefüllt sein kann ("Rohr-in-Rohr"). Diese Lösung entspricht weitgehend herkömmlichen Dewar-Gefäßen. Andere dargestellte Systeme beschreiben vorgefertigte Formkörper, welche an die Geometrien der zu isolierenden Bauteile exakt angepasst sind, z.B. im Sinne von Halbschalen, welche um die zu isolierenden Bauteile beidseitig herumgelegt und daran fixiert werden. Schließlich werden Systeme beschrieben, welche aus einzelnen abgeschlossenen und bereits evakuierten Bereichen bestehen, welche miteinander flexibel verbunden sind und somit einen größeren Verbund bilden, welcher typischerweise in einer Richtung begrenzt krümmbar (rollbar) ist, so dass zum Beispiel zylindrische Körper (Rohre, Behälter) formschlüssig eingehüllt werden können. Allen diesen Systemen ist gemeinsam, dass bereits beim Anlegen des Vakuums die spätere Form des zu umschließenden Bauteils weitgehend vorgegeben ist oder wenigstens berücksichtigt werden muss. Bei allen diesen Systemen ist zudem eine vollständige Umschließung eines zu isolierenden Bauteils ohne in Wärmetransportrichtung verlaufende Kanten oder Nähte (sog. Wärmebrücken) praktisch nicht zu realisieren. Den teilweise hervorragenden Isolationseigenschaften solcher Isolationsbauteile in deren Fläche stehen somit im praktischen Einsatz zahlreiche unvermeidliche Wärmebrücken an den Übergängen von einem Isolationsbauteil zum nächsten gegenüber. Die gesamte effektive Isolationswirkung einer solcherart isolierten Rohrstrecke für kalte oder heiße Medien ist für den Transport über längere Strecken damit üblicherweise deutlich zu schlecht. Zudem ist, bedingt durch die Steifigkeit der einzelnen evakuierten Bereiche dieser Isolationsbauteile deren Verarbeitung oft schwierig und geometrisch stark eingeschränkt.

Daher sind diese Systeme grundsätzlich nur eingeschränkt geeignet, um Leitungssysteme aufzubauen, durch die entsprechende Medien in kalter oder heißer Form transportiert werden können.

Aus den Druckschriften EP-A-0 618 065, EP-A- 0 446 486, EP-A- 0 396 961 und EP-A-0 355 294 sind insbesondere plattenförmige Vakuumisolationssysteme bekannt, die eine besonders hohe Wärmedämmleistung besitzen. Diese Vakuumisolationssysteme können beispielsweise zur Isolation von Kühlschränken eingesetzt werden. Diese Formkörper umfassen eine gasdichte Hülle, die mit einem Isolationsmaterial gefüllt ist. Nach Evakuierung der Isolationsschicht mittels mechanischer Pumpen und dem Verschließen der Hülle wird der Formkörper starr. Da die Form der Isolationssysteme beim Verbauen nicht verändert werden kann, werden diese Formkörper vorwiegend plattenförmig eingesetzt. Andere Formgestaltungen können zwar hergestellt werden, jedoch ist deren Verarbeitung entsprechend aufwendig.

Bei besonders komplexen Isolationssystemen kann das Vakuum erst nach dem Einbauen bzw. Verlegen, beispielsweise durch Pumpen erzeugt werden. Dies wird insbesondere im Zusammenhang mit den zuvor dargelegten Isolationssystemen beschrieben. Das Erzeugen von Vakuum durch Pumpen ist jedoch mit vielen Nachteilen behaftet, so dass derartige Systeme bisher nicht für weiträumige Leitungssysteme eingesetzt wurden. So steigt die notwendige Zeit, um ein ausreichendes Vakuum zu erzielen mit der Wegstrecke zwischen den verschiedenen Evakuationsstellen und erweist sich insbesondere bei sehr feinteiligen Materialien als sehr problematisch. Beispielsweise zeigt ein Aerogel zwar eine hervorragende Isolationswirkung, jedoch ist die Zeit, über die die Pumpen betrieben werden müssen, um zu einer ausreichenden Isolationswirkung zu gelangen, extrem hoch. Wird ein gröber strukturiertes Material eingesetzt, dann nimmt zwar die für die Evakuierung benötigte Zeit ab. Gleichzeitig erhält man aber auch ein Isolationsmaterial, welches bei gleichem Restgasdruck (bei gleichem Vakuum) eine höhere Wärmeleitfähigkeit aufweist, als ein feinteiligeren Material. Nicht zuletzt entsteht durch das Evakuieren zudem ein beträchtlicher Energieaufwand beim Pumpen. Aus diesen Gründen konnten sich derartige Systeme bisher nicht durchsetzen. Bei einer Massenfertigung, beispielsweise bei der Herstellung von Kühlschränken, ist ein nachträgliches Erzeugen des Vakuums ebenfalls nur schwer realisierbar, da die Taktzeiten durch entsprechend lange Evakuierungszeiten vorgegeben werden.

Falls das System durch ein zu transportierendes Fluid gekühlt wird, kann ein dem Einsatz von Pumpen entsprechendes Vakuum durch Ausfrieren von Gasen erzeugt werden. Das Erzeugen von Vakuum durch ein Verfestigen von Gasen ist jedoch nur für Leitungssysteme möglich, durch die ein entsprechend kaltes Medium fliesst. Für die zuvor beschriebenen Fernwärmesysteme, die nur als eines von vielen Beispielen dargelegt wurden, ist dieser Mechanismus nicht anwendbar.

Darüber hinaus wird in WO 2005/043028 eine Kombination von Metallen und Wasserstoff beschrieben, die zum Absenken des Gasdruckes innerhalb der Isolationsschicht eingesetzt werden kann. Nachteilig ist jedoch die schwierige Handhabung dieses Systems. Aus der Druckschrift EP 347 367 ist die Erzeugung von Vakuum in einem Hohlkörper bekannt, bei dem ein Metallhydrid erhitzt wird, wobei der freiwerdende Wasserstoff die Luft verdrängt. Anschließend wird das System verschlossen. Durch die Abkühlung wird der sich im Hohlkörper befindliche Wasserstoff vom Metall unter Bildung von Metallhydrid aufgenommen, so dass ein Vakuum entsteht. Allerdings sind die notwendigen Temperaturen sehr hoch, so dass sich dieses System zur Bildung von Vakuum in den in WO 2005/043028 beschriebenen Leitungssystemen bisher nicht durchsetzen konnte.

In Anbetracht des hierin angegebenen und diskutierten Standes der Technik war es mit eine Aufgabe der vorliegenden Erfindung ein Bauteil zu Herstellung von Vakuumisolationssystemen zur Verfügung zu stellen, das ein hervorragendes Eigenschaftsprofil aufweist.

Das Eigenschaftsprofil umfasst insbesondere eine hohe Robustheit beim Verlegen des Bauteils und beim Betrieb von Isolationssystemen, die aus den Bauteilen erhältlich sind. Weiterhin sollte das Bauteil eine hervorragende Isolation ermöglichen, die unabhängig von einem kalten Medium erzielt wird, das innerhalb eines Isolationssystems fließt.

Eine weitere Aufgabe kann insbesondere darin gesehen werden, ein Bauteil mit einer hohen Isolationswirkung bereitzustellen, welches einfach verarbeitet werden kann. Hierbei sollte das Bauteil auch zur Isolation von komplexen Geometrien eingesetzt werden können. Weiterhin sollte das Bauteil auch bei einer Massenfertigung nicht zu langen Taktzeiten führen.

Darüber hinaus sollte das Bauteil dazu geeignet sein, eine besonders hohe Isolationsleistung zu erzielen. Die hierfür notwendig geringe Wärmeleitung sollte möglichst kostengünstig erzielt werden. Insbesondere sollte auf lange Pumpzeiten verzichtet werden, die im Allgemeinen mit hohen Kosten verbunden sind.

Eine weitere Aufgabe kann darin gesehen werden, derartige Bauteile und Isolationssysteme kostengünstig bereitzustellen.

Gelöst werden diese Aufgaben sowie weitere, die zwar nicht explizit genannt werden, sich aber aus den hierin diskutierten Zusammenhängen wie selbstverständlich ableiten lassen oder sich aus diesen zwangsläufig ergeben, durch das in Anspruch 1 beschriebene Bauteil. Zweckmäßige Abwandlungen dieses Bauteils werden in den auf Anspruch 1 rückbezogenen Unteransprüchen unter Schutz gestellt. Hinsichtlich eines Isolationssystems sowie des Verfahrens zur Erzeugung eines Vakuums liefern die Ansprüche 13 bzw. 15 eine Lösung der zugrunde liegenden Aufgaben.

Gegenstand der vorliegenden Erfindung ist dementsprechend ein Bauteil zur Herstellung von Vakuumisolationssystemen, umfassend mindestens eine Isolationsschicht, die von einer Hülle umgeben ist, wobei der Gasdruck, der in der Isolationsschicht besteht, durch ein im Bauteil vorgesehenes Mittel verringert werden kann, welches dadurch gekennzeichnet ist, dass das Mittel zur Verringerung des Gasdruckes aktivierbar ausgestaltet ist.

Durch die erfindungsgemäßen Maßnahmen gelingt es überraschend ein Bauteil zur Herstellung von Vakuumisolationssystemen sowie ein hieraus erhältliches Isolationssystem mit einem hervorragenden Eigenschaftsprofil zur Verfügung zu stellen.

Das Eigenschaftsprofil umfasst insbesondere eine hohes Sicherheitsniveau beim Verlegen des Bauteils und beim Betrieb von Isolationssystemen, die aus den Bauteilen erhältlich sind. Daher geht keine unmittelbare Gefährdung von Personen, der Umwelt oder Sachgütern von diesen Bauteilen oder Vakuumisolationssystemen aus. Ausgenommen von dieser Aussage sind selbstverständlich Gefährdungen, welche von jeglichen Medien, elektrischen Strom führenden Leitungen, dem Transport von Informationen dienenden Leitungen oder heißen oder kalten Oberflächen innerhalb der mittels der hier beschriebenen Bauteile oder Isolationssysteme umschlossenen Systembestandteile oder Komponenten ausgehen. Weiterhin können diese Bauteile nach kurzer Einweisung auch von ungeschultem Personal verbaut werden, wobei die hierdurch erhaltenen Vakuumisolationssysteme auch von diesen Personen in Betrieb genommen werden können.

Weiterhin ermöglicht das Bauteil eine hervorragende thermische Isolationsleistung, die unabhängig von einem kalten Medium erzielt wird, das innerhalb eines Isolationssystems fließt. Die hierfür notwendige geringe Wärmeleitung kann sehr kostengünstig erzielt werden. Insbesondere kann auf lange Pumpzeiten verzichtet werden, die im Allgemeinen mit hohen Kosten verbunden sind.

Die erfindungsgemäßen Bauteile und Isolationssysteme können kostengünstig bereitgestellt werden. Diese Kostenvorteile können durch den Einsatz von kostengünstigen und leicht zu verarbeitenden Komponenten und/oder Materialien gesteigert werden. Hierdurch können die Bauteile zudem besonders einfach verarbeitet und verlegt werden.

Darüber hinaus kann das Bauteil zur Isolation von komplexen Geometrien eingesetzt werden. Hierbei führt das Bauteil auch bei einer Massenfertigung nicht zu langen Taktzeiten.

Darüber hinaus ermöglichen die erfindungsgemäßen Bauteile und die hieraus erhältlichen Vakuumisolationssysteme eine hohe Dämmwirkung in Kombination mit einer hohen Flexibilität beim Verlegen und der Installation sowie einer hohen Robustheit in der Handhabung und im Betrieb. Weiterhin ist die Einsatzbreite der Vakuumisolationssysteme vorteilhaft, die insbesondere in sehr breiten Temperaturbereichen eingesetzt werden können, ohne dass die Isolationswirkung verringert wird.

Diese Vorteile können in allen der zuvor dargelegten Anwendungsgebiete genutzt werden, wobei vielfach synergistische Effekte zu erzielen sind. Auf dem Gebiet der Fernwärme-, Prozessdampf- und sonstige Wärmeträgersysteme bieten die durch die vorliegenden Bauteile erhältlichen Vakuumisolationssysteme Isolationseigenschaften, wie sie ansonsten bestenfalls gute konventionelle Vakuumisolationssysteme bieten können, bei gleichzeitig geringen Herstellkosten, einer sehr einfachen und flexiblen Verlegung sowie guter Handhabbarkeit auf der Baustelle. Bedingt durch die guten Isolationseigenschaften sind damit deutlich längere Distanzen wirtschaftlich realisierbar als bei Verwendung konventioneller Isolationssysteme, was zusätzliche Einsatzmöglichkeiten schafft. Außerdem können Isolationsmaterialien eingesetzt werden, die deutlich höhere Betriebstemperaturen als die gängigen PU-Schäume (ca. 110 °C Dauertemperatur) erlauben. Dadurch ist es grundsätzlich möglich, Wärme auf höherem Temperaturniveau und/oder mit größerer Temperaturdifferenz zwischen Vor- und Rücklauf zu transportieren. Letzteres ermöglicht eine Reduzierung des Massenstroms bzw. der Leitungsquerschnitte (was unter bestimmten Umständen zudem auch eine Verkleinerung der zur Nutzenergie-Entnahme dienenden Wärmetauscher-Systeme ermöglicht) und damit eine weitere Reduzierung der Investitionskosten.

Durch erfindungsgemäße Vakuumisolationssysteme, die zur Isolation von Gebäuden eingesetzt werden, kann der Heizenergiebedarf von Neubauten wie auch von Altbauten signifikant gesenkt werden, ohne der Architektur starke Einschränkungen aufzuerlegen und ohne die Baukosten erheblich zu steigern.

Hinsichtlich des Transports von heißem Leitungswasser sowie Wasser für Heizungszwecke durch Rohrleitungen in Gebäuden, ermöglicht die vorliegende Erfindung die Herstellung preiswerter, flexibler, leicht verlegbarer Rohr- oder Schlauchleitungen mit geringen Außendurchmessern, welche dennoch nach Inbetriebnahme Isolationskennwerte von Vakuumisolationen aufweisen, die bisher aus Kostengründen nicht realisiert werden konnten. Durch die Verwendung erfindungsgemäß isolierter Leitungen kann der Heizwärmebedarf von Gebäuden spürbar gesenkt werden.

Reaktoren und Apparate, die insbesondere in der Industrie benötigt werden profitieren von der vorliegenden Erfindung, da diese in idealer Weise die Vorteile herkömmlicher Fasermatten-Isolationen hinsichtlich Verarbeitbarkeit, Flexibilität und Preis mit den Isolationseigenschaften von Vakuumisolationen kombiniert. Bei Verwendung erfindungsgemäßer Hochleistungs-Kunststofffasern sind Dauerbetriebstemperaturen bis zu rund 270°C erreichbar, bei Verwendung von Glas-/Steinwolle-Fasern oder anderen keramischen Fasern und/oder Pulvern anstelle der Hochleistungs-Kunststofffasern sind auch deutlich höhere Temperaturen realisierbar. Somit kann der Heizenergiebedarf in der Industrie signifikant gesenkt werden.

Eine weitere interessante Anwendung sind PCM-Speicher (PCM = Phase Change Material: Materialien die durch einen Phasenübergang erhebliche Mengen an latenter Wärme aufnehmen und später im umgekehrten Prozess wieder abgeben können). Dies stellt eine Alternative zu Fern-/Nahwärmenetzen dar, bei der die Wärme in mobilen Behältern transportiert wird. Solche Behälter benötigen natürlich eine kostengünstige, hochwirksame, leichte und kleinvolumig bauende thermische Isolation, wie sie erfindungsgemäße Isolationssysteme darstellen.

Durch die vorliegende Erfindung kann der Kühlenergiebedarf von Kühlhäusern und Kühlräumen signifikant gesenkt werden, ohne der Architektur starke Einschränkungen aufzuerlegen und ohne die Baukosten erheblich zu steigern. Die maximale Lagerdauer von Kühlgütern in Transportverpackungen oder - behältern (z.B. Lebensmittel-Tankwagen, Kühlwagen, Gefriergut-Transportern) kann erheblich gesteigert werden, bzw. der Energiebedarf für den Ausgleich von unerwünschten Wärmeeinträgen kann signifikant sinken. Damit sinken auch Lärm- und Abgasbelästigungen, welche bislang von abgestellten Kühlfahrzeugen und -containern ausgehen.

Synergistische Effekte können durch die vorliegende Erfindung insbesondere auch bei der Isolierung von Transportmitteln, insbesondere von Flugzeugen erzielt werden. Poröse Isolationsmaterialien können auf herkömmliche Weise in Hohlräume zwischen Außenhülle und innerer Kabinenwand eingebracht werden. Durch die vorliegende Erfindung kann aus dieser Isolation eine Vakuumisolation gebildet werden, wobei ein Großteil der Hülle, die die Isolationsschicht umschließt, aus den Bauteilen des Transportmittels gebildet werden kann. Daher sind die Herstellkosten dieser Isolationen sehr gering, verglichen mit dem Einsatz konventioneller Vakuumisolationssysteme.

Ein weiterer Vorteil der erfindungsgemäß ausgeführten Isolation für den Flugzeug- und Leichtbau liegt in der Möglichkeit, durch die Verfestigung des Isolationsmaterials eine Versteifung der Gesamtkonstruktion zu bewirken. Dies kann beispielsweise durch eine Vielzahl voneinander gasdicht abgeschotteter kleiner, mit Fasern und/oder Pulvern gefüllter Zellen mittels der dazu notwendigen Trennwände erfolgen, welche Außen- und Innenwandung der Außenhüllenbauteile miteinander verbinden. Dies führt zu einer mechanisch sehr steifen bis hin zu selbsttragenden Konstruktion, analog eines konventionellen VIPs. Im Gegensatz zu diesen ist jedoch jede auch noch so komplexe dreidimensionale Struktur herstellbar, da die Erzeugung des Vakuums erst nach der passgenauen Installation und gasdichten Versiegelung des Gefüges initiiert wird. Eine ausreichende Zahl an einzelnen gegeneinander gasdichten Vakuum-Zellen sichert zudem auch im Falle von lokalen Beschädigungen der gesamten Konstruktion eine weiterhin hohe mechanische Festigkeit, anders als dies bei typischen großflächigen VIPs bei Verletzung der gasdichten Hülle der Fall wäre.

Die Erfindung betrifft ein Bauteil zur Herstellung von Vakuumisolationssystemen. Der Begriff Bauteil bedeutet im Rahmen der vorliegenden Erfindung ein Gegenstand, welcher allein oder gemeinsam mit weiteren gleichartigen oder verschiedenen Gegenständen geeignet ist, ein Vakuumisolationssystem herzustellen. Der Ausdruck Vakuumisolationssystem bezeichnet im Rahmen der vorliegenden Erfindung jeden Gegenstand, welcher Hohlräume umfassende Bereiche enthält, wobei in den Hohlräumen ein gegenüber normalem Atmosphärendruck erheblich verringerter Gasdruck vorherrscht, und der damit geeignet ist, den Abfluss oder die Aufnahme von Wärmeenergie zu verringern. Hierzu gehören insbesondere die zuvor dargelegten Leitungssysteme, durch die kalte Fluide, beispielsweise Wasserstoff in flüssiger oder gasförmiger Form geleitet werden, oder Fernwärmeleitungen, durch die heiße Fluide transportiert werden. Weiterhin zählen hierzu Isolationssysteme, die in Gebäuden, Kühlsystemen, Apparaten, Haushaltsgeräten und ähnlichem eingesetzt werden.

Das Bauteil umfasst mindestens eine Hülle, die eine Isolationsschicht umschließt. Die Hülle dient zur Aufrechterhaltung eines Vakuums, das nach dem Aktivieren des Mittels zur Verringerung des Gasdruckes in der Isolationsschicht gebildet wird. Dementsprechend wirkt die Hülle als Gasbarriereschicht, die eine möglichst geringe Gasdurchlässigkeit aufweisen sollte.

Es ist bekannt, dass die Gasdichtigkeit von dem Gas abhängig ist, welches durch eine Schicht diffundieren kann. Weiterhin ist die Gasdiffusion von der Art und der Dicke des Hüllmaterials abhängig. Hierbei sollte die Gasdichtigkeit möglichst hoch sein, ohne dass die Verarbeitbarkeit und der Preis des Hüllmaterials unannehmbar ansteigen. Weiterhin ist der Druckanstieg, der durch eine Gasdiffusion eintritt von der Fläche abhängig, durch die das Gas diffundieren kann. Die Güte der Dichtheit ist weiterhin von der beabsichtigten Lebensdauer des Systems abhängig, in dem das vorliegende Bauteil eingesetzt wird.

Vorzugsweise werden die zuvor dargelegten Parameter, wie zum Beispiel die Dicke des Hüllmaterials sowie die Art des Hüllmaterials in Abhängigkeit vom Verhältnis von Hüllmaterialoberfläche zu umhülltem Volumen, so gewählt, dass der Gasdruck, der sich nach dem Aktivieren des Mittels zur Verringerung des Gasdrucks ausbildet, in einem Jahr um höchstens 20 mbar, bevorzugt höchstens 10 mbar, ganz besonders bevorzugt um höchstens 2 mbar ansteigt. Dieser Gasdruck bezieht sich auf den Gesamtdruck, wobei dieser Wert unter Normalbedingungen (1013 mbar, 20°C) mit Luft als äußerem Medium gemessen wird.

Die Hülle des Bauteils kann beispielsweise bereits bei der Anlieferung eine entsprechende Gasdichtheit aufweisen. Weiterhin kann die Hülle erst beim Einbauen oder Verlegen des Bauteils gasdicht ausgebildet werden. Dementsprechend bezieht sich der Begriff der "Gasdichtheit" auf den verbauten oder eingebauten Zustand des Bauteils.

Bei Leitungssystemen kann die Hülle zum Beispiel eine oder mehrere Mantelschichten und eine oder mehrere Abdichtschichten umfassen, die beispielsweise durch Fluid führende Leitungen gebildet werden. Hierbei können die Isolationsschichten, die Mantelschichten sowie die inneren Abdichtschichten von verschiedenen Bauteilen zusammengebaut werden, um beispielsweise ein Leitungssystem zu bilden.

Bei Anlagen oder Apparaten, beispielsweise Kühlschränken oder Gefriertruhen, kann zum Beispiel die Innen- oder Außenverkleidung ein Teil der Hülle des Bauteils der vorliegenden Erfindung bilden.

Materialien, aus denen die Hülle gebildet werden kann, sind an sich bekannt, wobei in diesem Zusammenhang auf die zuvor dargelegten Druckschriften verwiesen wird. Vielfach ist die Wahl des geeigneten Materials vom Einsatzzweck des Bauteils abhängig. So können insbesondere Metalle und Kunststoffe eingesetzt werden, um die Hülle zu fertigen.

Überraschende Vorteile können beispielsweise durch Kunststofffolien erzielt werden, aus denen zumindest ein Teil der Hülle gebildet werden kann. Bevorzugt weisen diese Kunststofffolien eine Wasserdampfdurchlässigkeit kleiner oder gleich 0,05, besonders bevorzugt kleiner oder gleich 0,005, ganz besonders bevorzugt kleiner oder gleich 0,001 g/(m².d) bei 23 °C und 85 % relativer Feuchte auf. Die Durchlässigkeiten gegenüber anderen Gasen (z. B. O₂, N₂, CO₂) sind in der Summe vorzugsweise nicht größer als 0,5, bevorzugt kleiner oder gleich 0,1 cm³/(m².d.bar) bei 23 °C. Die unteren Grenzwerte ergeben sich insbesondere aus der Lebensdauer der Bauteile sowie den technischen Gegebenheiten. So sind Werte für die Wasserdampfdurchlässigkeit von kleiner 0,0001 g/(m².d) und für die Durchlässigkeiten gegenüber anderen Gasen von kleiner als 0,01 cm³/(m².d.bar) bei den zuvor dargelegten Bedingungen nur sehr aufwendig oder durch Zuhilfenahme zusätzlicher metallhaltiger Schichten zu erzielen. Daher liegt die Wasserdampfdurchlässigkeit bevorzugt im Bereich von 0,0001 bis 0,08, besonders bevorzugt im Bereich von 0,0002 bis 0,05 g/(m².d) bei 23 °C und 85 % relativer Feuchte. Die Durchlässigkeiten gegenüber anderen Gasen (z. B. O₂ N₂, CO₂) liegt in Summe bevorzugt im Bereich von 0,01 bis 0,1, besonders bevorzugt 0,03 bis 0,05 cm³/(m².d.bar) bei 23 °C.

Als besonders wirksam haben sich Folien erwiesen, die mehrschichtig derart aufgebaut sind, dass Gasbarrieren auf der Ober- und Unterseite mit einer hochwirksamen Wasserdampfsperre über Kleberschichten verbunden sind.

Eine derartige Umhüllung kann eine sperrschichthaltige Mehrschichtfolie sein, die folgende Schichten aufweist:
A) eine Schutzlackschicht aus PVDC, die gegebenenfalls eine Polyvinylalkoholschicht enthalten kann.
B1) gegebenenfalls eine Verbindungs- oder Klebeschicht,
C1) eine Polyolefinschicht,
B2) eine Verbindungs- oder Klebeschicht,
D) eine Ethylenvinylalkoholcopolymerschicht, die gegebenenfalls wenigstens einseitig mit einer Polyamidschicht E durch Koextrusion versehen ist,
B3) gegebenenfalls eine Verbindungs- oder Klebeschicht,
C2) eine Polyolefinschicht.

Folien mit diesem Aufbau werden insbesondere in EP-A-0 446 486, eingereicht am 28.12.90 beim Europäischen Patentamt mit der Anmeldenummer 90125659, US 5,389,420, einreicht am 30.11.92 beim Patentamt der Vereinigten Staaten von Amerika (USPTO) mit der Anmeldenummer 983,216 und US 5,236,758, eingereicht am 15.05.91 beim Patentamt der Vereinigten Staaten von Amerika (USPTO) mit der Anmeldenummer 669,738 dargelegt, wobei auf diese Druckschriften zu Offenbarungszwecken verwiesen wird und die darin offenbarten Folien in diese Anmeldung eingefügt werden.

Je nach Verwendung des vorliegenden Bauteils kann es vorteilhaft sein, die Wärmeleitfähigkeit parallel zur Hülle zu minimieren. Gemäß einem besonderen Aspekt der vorliegenden Erfindung weist die Hülle vorzugsweise keine Metallschicht auf, die zu einer Wärmeleitung führen könnte. Dementsprechend kann das Hüllmaterial vorzugsweise metallfrei ausgebildet sein. Diese Ausgestaltung kann insbesondere für Leitungssysteme zweckmäßig sein, die kalte Fluide transportieren.

Andererseits sind auch Ausgestaltungen vorteilhaft, die eine besonders geringe Gasdurchlässigkeit erfordern, wobei diese durch die Verwendung von Metallen im Hüllmaterial erzielt werden kann. Diese Ausgestaltungen können insbesondere bei Leitungssystemen sinnvoll sein, die warme Fluide leiten, wie zum Beispiel Fernwärmeleitungen oder Warmwasserleitungen in Gebäuden, oder bei Apparaten in denen Wärme gespeichert wird.

Ein durch ein erfindungsgemäßes Bauteil erhältliches Vakuumisolationssystem kann mindestens einen wärmeisolierten Bereich aufweisen. Dementsprechend ist das erfindungsgemäße Bauteil so konstruiert, dass sich dieser wärmeisolierte Bereich ausbilden kann. Der Begriff "wärmeisolierter Bereich" bezeichnet im Rahmen der vorliegenden Erfindung ein Volumen, welches mit einem heißen oder kalten Stoff gefüllt werden kann oder durch das ein heißes oder kaltes Fluid geleitet werden kann, wobei sich die in diesem Volumen befindliche Substanz gegen Wärmeübertragung isoliert ist, d.h. die Substanz unterliegt innerhalb dieses Bereichs einer verminderten Temperaturänderung.

Ein erfindungsgemäßes Bauteil weist weiterhin mindestens eine Isolationsschicht auf. Die Isolationsschicht dient zur Verringerung einer Wärmeübertragung zwischen der Umgebung und dem wärmeisolierten Bereich.

Da die Wärmeübertragung durch eine Druckabsenkung innerhalb der Wärmeisolationsschicht vermindert wird, muss diese Schicht eine genügende mechanische Stabilität aufweisen, um ein Kollabieren des Raumes innerhalb der Hülle zu verhindern, sofern diese mechanische Stabilität nicht bereits durch eine ausreichend mechanisch stabile Umhüllung der Isolationsschicht sichergestellt ist. Üblich umfasst die Isolationsschicht Fasern, Schäume oder Partikel (beispielsweise Kieselsäurepulver), oder Kombinationen der vorgenannten Stoffklassen, welche bereits durch ihr Gefüge eine gewisse mechanische Stabilität ermöglichen. Hierdurch wird ein Volumen sichergestellt, innerhalb dessen ein geringer Druck herrschen kann, so dass eine geringe Wärmeleitfähigkeit erzielt werden kann. Dieses Volumen kann auch als Porenvolumen bezeichnet oder angesehen werden.

Zu den bevorzugten Materialien zur Herstellung der Isolationsschicht zählen insbesondere feinteilige Siliciumdioxid-Partikel, wie zum Beispiel Fällungskieselsäure, pyrogene Kieselsäuren sowie Aerogele. Diese Materialien können einzeln oder als Mischung untereinander oder als Mischung mit weiteren Materialien (z.B. in Form von Fasern oder Faserverbünden) eingesetzt werden. Darüber hinaus kann die Isolationsschicht übliche Additive, beispielsweise Ruß oder andere IR-Absorber umfassen.

Materialien zur Herstellung der Isolationsschicht werden insbesondere in EP-A-0 446 486, eingereicht am 28.12.90 beim Europäischen Patentamt mit der Anmeldenummer 90125659, US 5,389,420, einreicht am 30.11.92 beim Patentamt der Vereinigten Staaten von Amerika (USPTO) mit der Anmeldenummer 983,216 und US 5,236,758, eingereicht am 15.05.91 beim Patentamt der Vereinigten Staaten von Amerika (USPTO) mit der Anmeldenummer 669,738 dargelegt, wobei auf diese Druckschriften zu Offenbarungszwecken verwiesen wird und die darin offenbarten Materialien zur Herstellung der Isolationsschicht in diese Anmeldung eingefügt werden. Bevorzugt einzusetzende Aerogele werden beispielsweise in den Druckschriften WO 2007/044341 A2, WO 02/052086 A2 und WO 98/13135 beschrieben.

Gemäß einem besonderen Aspekt der vorliegenden Erfindung kann die Isolationsschicht einen Faserverbund umfassen. Ein bevorzugt einzusetzender Faserverbund umfasst Hochleistungskunststofffasern und Bindefasern. Die Hochleistungskunststofffasern sind in der Fachwelt bekannt. Hierunter sind insbesondere Kunststofffasern zu verstehen, die bei hohen Temperaturen einsetzbar sind. Vorzugsweise weisen die Kunststoffe, mit denen diese Fasern hergestellt werden, niedrige Festkörperwärmeleitfähigkeiten auf, sind sehr elastisch und hart, chemikalienbeständig, schwer entflammbar, und verfügen über einen relativ hohen IR-Extinktionskoeffizienten.

Zweckmäßig weisen die Hochleistungskunststofffasern einen Schmelzpunkt oder eine Glasübergangstemperatur von mindestens 200°C, besonders bevorzugt mindestens 230°C auf. Diese Eigenschaft kann mittels DSC (Differential Scanning Calorimetry) gemessen werden.

Die Festkörperwärmeleitfähigkeit bevorzugter Kunststoffe zur Herstellung von Hochleistungskunststofffasern beträgt vorzugsweise höchstens 0,7 W/(mK), besonders bevorzugt höchstens 0,2 W/(mK), beispielsweise gemessen gemäß nach ASTM 5930-97 oder DIN 52616 bei einer Temperatur von 293 K.

Zu den bevorzugten Hochleistungskunststofffasern zählen unter anderem Polyimidfasern, Polybenzimidazolfasern, Polyaramidfasern, Polyetherketonfasern und/oder Polyphenylensulfidfasern, wobei Polyimidfasern besonders bevorzugt sind.

Polyimide sind an sich bekannt und beispielsweise in Ullmann's Encyclopedia of Industrial Chemistry 5. Auflage auf CD-ROM dargelegt.

Polyimide können vorzugsweise ein Gewichtsmittel des Molekulargewichts im Bereich von 25000 bis 500000 g/mol aufweisen.

Neben Homopolymeren können des Weiteren auch Copolymere als Polyimide eingesetzt werden, die neben den Imidbausteinen weitere funktionale Gruppen in der Hauptkette umfassen. Gemäß einem besonderen Aspekt der vorliegenden Erfindung können die Polyimide mindestens 50 Gew.-%, bevorzugt mindestens 70 Gew.-% und ganz besonders bevorzugt mindestens 90 Gew.-% von Monomerbausteinen abgeleitet sein, die zu Polyimiden führen.

Besonders bevorzugt einzusetzende Polyimide können kommerziell unter der Handelsbezeichnung P84 von der Firma Evonik Fibres GmbH, Lenzing/Österreich oder von der Firma HP-Polymer GmbH, Lenzing / Österreich und unter der Bezeichnung Matrimid von Huntsman Advanced Materials GmbH/Bergkamen erhalten werden.

Gemäß einer bevorzugten Ausführungsform können die Hochleistungskunststofffasern eine nicht-kreisförmige Querschnittsform aufweisen. Nicht-kreisförmige Querschnittsformen weisen im Allgemeinen Ausbuchungen und Einbuchtungen auf. Unter Ausbuchtung ist hierbei eine Begrenzung der Faser in Querrichtung zu sehen, die einen maximalen Abstand vom Faserschwerpunkt aufweist und unter Einbuchtung eine Begrenzung der Faser, die einen minimalen Abstand vom Faserschwerpunkt aufweist. Die Ausbuchtungen bzw. Einbuchtungen sind dementsprechend lokale Maxima bzw. Minima des Abstandes von äußerer Begrenzung der Faser und dem Faserschwerpunkt. Die größte Strecke von Schwerpunkt der Faser zu mindestens einer der Ausbuchtungen, kann hierbei als äußerer Radius des Faserquerschnittes gesehen werden. Ähnlich kann ein innerer Radius definiert werden, der sich aus der minimalen Strecke zwischen dem Schwerpunkt der Faser und mindestens einer Einbuchtung ergibt. Vorzugsweise beträgt das Verhältnis von äußerem Radius zu innerem Radius mindestens 1,2, besonders bevorzugt mindestens 1,5 und ganz besonders bevorzugt mindestens 2. Die Querschnittsform der Fasern sowie die Ausdehnung können durch Elektronenmikroskopie bestimmt werden.

Zu diesen nicht-kreisförmigen Querschnittsformen zählen insbesondere multilobale Querschnitte und sternförmige Querschnitte, die drei, vier, fünf, sechs und mehr Ausbuchungen aufweisen. Besonders bevorzugt weist die Faser einen trilobalen Querschnitt auf. Polyimidfasern mit einem nicht-kreisförmigen Querschnitt, insbesondere einem trilobalen Querschnitt, können insbesondere dadurch erhalten werden, dass bei den üblichen Lösungsspinnverfahren eine Lösung mit einem relativ geringen Polymeranteil eingesetzt wird.

Neben Vollfasern können des Weiteren auch Hohlfasern eingesetzt werden. Bevorzugte Hohlfasern weisen ebenfalls eine nicht-kreisförmige Querschnittsform, insbesondere eine trilobale Querschnittsform auf.

Die Hochleistungsfasern können als Stapelfaser oder als Endlosfilament eingesetzt werden.

Vorzugsweise weisen die Hochleistungskunststofffasern einen Durchmesser im Bereich von 1 bis 50 µm, besonders bevorzugt 2 bis 25 µm und ganz besonders bevorzugt 3 bis 15 µm auf. Der Durchmesser bezieht sich hierbei auf die maximale Ausdehnung der Faser in Querrichtung, die durch den Schwerpunkt gemessen wird. Der Durchmesser kann unter anderem mit Elektronenmikroskopie (REM) bestimmt werden.

Zweckmäßig können die Hochleistungskunststofffasern einen Fasertiter von höchstens 10 dtex, vorzugsweise höchstens 5 dtex aufweisen. Vorzugsweise liegt der Fasertiter der Hochleistungskunststofffasern im Bereich von 0,05 bis 4 dtex, besonders bevorzugt 0,1 bis 1 dtex, gemessen bei der maximalen Ausdehnung. Die Messung des Fasertiters kann gemäß der Norm DIN EN ISO 1973 erfolgen.

Gemäß einem besonderen Aspekt der vorliegenden Erfindung können Hochleistungsfasern eingesetzt werden, die eine Kräuselung aufweisen. Zweckmäßig kann die Kräuselung im Bereich von 1 bis 50, besonders bevorzugt im Bereich von 3 bis 10 pro cm liegen. Die Kräuselung der Fasern kann durch optische Methoden bestimmt werden. Vielfach ergeben sich diese Werte aus der Herstellung.

Gemäß einer weiteren bevorzugten Ausführungsform können Hochleistungsfasern verwendet werden, die keine oder nur eine geringe Kräuselung aufweisen.

Neben den Hochleistungskunststofffasern kann ein bevorzugt einzusetzender Faserverbund Bindefasern umfassen, die zum Verbinden der Hochleistungskunststofffasern dienen. Vorzugsweise weisen die Bindefasern einen Schmelzpunkt oder eine Glasübergangstemperatur von höchstens 180°C, besonders bevorzugt höchstens 150°C auf. Der Schmelzpunkt oder die Glasübergangstemperatur kann mittels DSC gemessen werden.

Vorzugsweise umfassen die die Bindefasern Polyolefinfasern, Acrylfasern, Polyacetatfasern, Polyesterfasern und/oder Polyamidfasern.

Bevorzugt weisen die Bindefasern einen Durchmesser im Bereich von 1 bis 50 µm, bevorzugt 2 bis 20 µm und ganz besonders bevorzugt 4 bis 10 µm auf. Der Durchmesser bezieht sich hierbei auf die maximale Ausdehnung der Faser in Querrichtung, die durch den Schwerpunkt gemessen wird.

Der Fasertiter bevorzugter Bindefasern beträgt vorzugsweise weniger als 10 dtex, besonders bevorzugt weniger als 5 dtex. Zweckmäßig zeigen bevorzugte Bindefasern einen Fasertiter im Bereich von 0,05 bis 4, besonders bevorzugt 0,1 bis 2 dtex, gemessen bei der maximalen Ausdehnung.

Der Faserverbund kann vorzugsweise mindestens 70 Gew.-% Hochleistungskunststofffasern und höchstens 30 Gew.-% Bindefasern umfassen. Der Anteil an Hochleistungskunststofffasern liegt bevorzugt im Bereich von 75 Gew.-% bis 99,5 Gew.-%, besonders bevorzugt im Bereich von 80 bis 95 Gew.-%. Die obere Grenze des Anteils an Bindefasern ergibt sich aus der benötigten Leistungsfähigkeit des Faserverbundes, die untere Grenze aus den Anforderungen, die durch die Herstellungsmethoden der Isolationssysteme gegeben sind. Vorzugsweise liegt der Anteil an Bindefasern im Bereich von 0,5 Gew.-% bis 25 Gew.-%, besonders bevorzugt im Bereich von 5 Gew.-% bis 20 Gew.-%.

Der Faserverbund kann bevorzugt eine schichtartige Anordnung der Fasern aufweisen, wobei mindestens ein Teil der Fasern durch Berührungspunkte miteinander verbunden sind, die durch ein Erweichen der Bindefasern erhältlich sind.

Der Begriff "schichtartige Anordnung der Fasern" bedeutet, dass mindestens eine Hauptorientierung der Fasern vorhanden ist, die im Wesentlichen in einer Ebene liegt. Hierbei ist der Begriff "Ebene" weit zu verstehen, da die Fasern eine dreidimensionale Ausdehnung haben und die Ebene auch gekrümmt sein kann. Der Ausdruck "im Wesentlichen" bedeutet dementsprechend, dass die Hauptorientierung der Fasern so ausgerichtet ist, dass ein möglichst geringer Anteil der Fasern in Richtung eines Wärmegradienten orientiert ist. Die Hauptorientierung ergibt sich aus der über die Länge der Faser gemittelten Richtung der Fasern, wobei kleinere Richtungsänderungen vernachlässigt werden können.

Eine schichtartige Anordnung in diesem Sinn wird im Allgemeinen bei der Herstellung von Vliesen oder Vliesstoffen erzielt. Bei diesen Verfahren werden Filamente oder Stapelfasern in einer Ebene angeordnet und anschließend verfestigt. Dies kann beispielsweise durch Trockenverfahren unter Verwendung von Luft (air-laid) oder durch Nassverfahren erfolgen. Vorzugsweise weisen nur wenige Fasern eine Hauptorientierung auf, die senkrecht zu dieser Ebene ausgerichtet ist. Dementsprechend wird der Faserverbund im Allgemeinen nicht durch eine ausgeprägte Vernadelung verfestigt.

Der Faserverbund wird durch ein Erweichen und anschließendes Abkühlen der Bindefasern erhalten. Verfahren hierzu sind insbesondere in den Schriften US 4,588,635, US 4,681,789, US 4,992,327 und US 5,043,207 der Firma Albany International Corp., Albany, N.Y. (USA) dargestellt. Die Temperatur hängt insbesondere von der Erweichungstemperatur (Glasübergangstemperatur oder Schmelztemperatur) der Bindefasern ab. Hierbei ist es vielfach nicht notwendig, dass alle Fasern durch Berührungspunkte miteinander verbunden sind, die durch ein Erweichen der Bindefasern erhältlich sind. Je höher dieser Anteil, desto bessere mechanische Eigenschaften weist der Verbund auf. Allerdings kann die Wärmeleitfähigkeit des Verbundes zunehmen. In diesem Zusammenhang sei erwähnt, dass die Fasern im Verbund auch Berührungspunkte aufweisen können, die nicht durch ein Erweichen der Bindefasern erhalten wurden. Hierzu gehören insbesondere Punkte, an denen sich die Hochleistungskunststofffasern berühren.

Innerhalb einer Ebene der schichtartigen Anordnung können die Fasern vorzugsweise genau eine Hauptorientierung aufweisen, wobei die Hauptorientierung der Fasern verschiedener Ebenen besonders bevorzugt einen Winkel zueinander zeigen. Der Begriff "Hauptorientierung der Faser" ergibt sich aus der Durchschnittsorientierung der einzelnen Faser über deren Gesamtlänge. Der Winkel, den die orientierten Fasern verschiedener Ebenen zueinander aufweisen können, liegt vorzugsweise im Bereich von 5° bis 175°, besonders bevorzugt im Bereich von 60° bis 120°. Die Hauptorientierung der Fasern sowie die Winkel der Fasern verschiedener Ebenen zueinander können durch optische Methoden bestimmt werden. Vielfach ergeben sich diese Werte aus der Herstellung, wobei die Orientierung der Fasern beispielsweise durch Kardieren und/oder Querlegen vorgegeben werden kann.

Eine geringe Dichte geht vielfach mit einer besonders geringen Wärmeleitfähigkeit des Faserverbundes einher. Andererseits nimmt die Belastbarkeit des Faserverbundes durch eine geringe Dichte ab, so dass hierdurch vielfach die Stabilität zu gering werden kann, um einer Leitung, die heißes oder kaltes Fluid leitet, einen ausreichenden Halt zu bieten. Mit überraschendem Vorteil weist daher ein erfindungsgemäßer Faserverbund, der beispielsweise in einem Isolationsmaterial vorgesehen ist, vorzugsweise eine Dichte im Bereich von 50 bis 300 kg/m³, besonders bevorzugt 100 bis 150 kg/m³ auf, wobei diese Werte unter einer Belastung gemessen werden, die durch die Verarbeitung und den Einbau in das Isolationsmaterial bedingt sind. Diese Belastung quer zur Ebene der Hauptorientierung der Fasern, bei der diese Dichtewerte gelten, liegt beispielsweise im Bereich von 1 mbar bis 1000 mbar, wobei diese Dichtewerte beispielsweise bei einer Belastung von 1 mbar, 10 mbar, 50 mbar, 100 mbar, 200 mbar, 400 mbar, 600 mbar, 800 mbar oder 1000 mbar gemessen werden können.

Im unbelastetem Zustand, insbesondere vor der Verarbeitung kann der Faserverbund vorzugsweise eine Dichte im Bereich von 1 bis 30 kg/m³, besonders bevorzugt 5 bis 20 kg/m³ aufweisen, wobei diese Dichte bei Dicken des unverarbeiteten Faserverbundes von maximal 5 cm gemessen werden kann.

Vorzugsweise beträgt die mittlere Wärmeleitfähigkeit eines erfindungsgemäßen Faserverbundes gemessen senkrecht zu den Ebenen der schichtförmigen Anordnung höchstens 10,0*10⁻³ W(mK)⁻¹, bevorzugt höchstens 5,0 mW(mK)^{**-**1} und besonders bevorzugt höchstens 1,0*10⁻³ W(mK)⁻¹. Die Messung kann beispielsweise bei Raumtemperatur (293 K) und/oder bei tiefen Temperaturen, beispielsweise 150 K oder 77 K, durchgeführt werden, wobei das Material einer Belastung bei diesen Bedingungen für mindestens 14 Tage standhält. Die Prüfung wird vorzugsweise bei einem geringen Absolutdruck, beispielsweise einem Druck von 1 mbar oder weniger gemäß DIN EN 12667 ("Bestimmung des Wärmedurchlasswiderstands nach dem Verfahren mit dem Platten-Gerät und dem Wärmestrommessplatten-Gerät für Stoffe mit hohem und mittleren Wärmedurchlasswiderstand") durchgeführt. Die Bestimmung kann beispielsweise bei einem Gasdruck innerhalb des zu vermessenden Faserverbundes von 0,01 mbar und bei einem Belastungsdruck, der durch die Messapparatur auf den zu vermessenden Faserverbund quer zur Ebene der Hauptorientierung der Fasern ausgeübt wird, von 70 mbar durchgeführt werden.

Die zuvor dargelegten Wärmeleitfähigkeitswerte können insbesondere dadurch erzielt werden, dass senkrecht zur Faserebene der schichtförmigen Anordnung nur eine geringe Wärmeübertragung erfolgt. Daher wird vorzugsweise auf eine ausgeprägte Vernadelung oder auf eine Verfestigung mit einer hohen Menge an flüssigen Bindemitteln verzichtet, die zu Wärme- bzw. Kältebrücken senkrecht zur schichtförmigen Faseranordnung führen können. Eine geringe Vernadelung oder die Verwendung von geringen Mengen an flüssigen Bindemitteln kann jedoch eingesetzt werden, solange diese Maßnahmen nur zu einer geringen Erhöhung der Wärmeleitfähigkeit führen.

Besonders bevorzugt weist ein erfindungsgemäßer Faserverbund eine hohe Stabilität auf, wobei diese Stabilität auch in Richtung senkrecht zur Ebene der Hauptorientierung der Fasern gegeben ist. So zeigt ein erfindungsgemäßer Faserverbund nach der Verarbeitung bzw. im Isolationsmaterial eine relativ geringe Kompressibilität, die bei einer Zunahme der Belastung von 1 mbar vorzugsweise höchstens 50% beträgt, d.h. bei einer Erhöhung der Belastung von 1 mbar nimmt die Dicke des Faserverbundes um höchstens 50%, vorzugsweise um höchstens 30%, insbesondere bevorzugt um höchstens 10% und ganz besonders bevorzugt um höchstens 5%, bezogen auf die ursprüngliche Dicke des verarbeiteten Verbundes, ab.

Bauteile oder Vakuumisolationssysteme im Sinne der zuvor dargelegten Ausführungen sind unter anderem in DE-A-36 30 399, EP-A-0 949 444, US 4,924,679, DE-A-100 31 491, DE 692 02 950 T2, DE 195 11 383 A1, DE 196 41 647 C1, DE 695 19 354 T2, DE-A-20 13 983, WO 2005/043028, EP-A-0 618 065, EP-A- 0 446 486, EP-A- 0 396 961 und EP-A-0 355 294 beschrieben. In diesen Systemen wird jedoch das Vakuum auf herkömmliche Weise, beispielsweise über Pumpen erzeugt.

Nach Anspruch 1 ist ein Bauteil gemäß der vorliegenden Erfindung im Gegensatz zu den zuvor dargestellten Systemen jedoch so aufgebaut, dass der Gasdruck, der in der Isolationsschicht besteht, durch ein im Bauteil vorgesehenes Mittel verringert werden kann, das aktivierbar ausgestaltet ist.

Das Mittel zur Verringerung des Gasdrucks umfasst daher ein oder mehrere Substanzen, die in der Lage sind, Vorgänge zu bewirken, die zur Verringerung der Molzahl der sich in der Gasphase befindlichen Atome oder Moleküle führen. Diese Substanzen werden hierin auch als Wirksubstanzen bezeichnet. Konkrete Ausgestaltungen des Mittels zur Verringerung des Gasdruckes bzw. der Wirksubstanzen sind von der Art des Gases abhängig, welches vor der Aktivierung desselben in der Isolationsschicht enthalten ist. Vorzugsweise kann das Mittel zur Verringerung des Gasdrucks ein sich in der Isolationsschicht befindliches Gas absorbieren, adsorbieren und/oder mit diesem chemisch reagieren.

Zu den bevorzugten Gasen, die sich vor dem Aktivieren des Mittels zur Verringerung des Gasdruckes in der Isolationsschicht befinden können, gehören unter anderem basische Gase, wie zum Beispiel NH₃; sauere Gase, wie zum Beispiel Kohlendioxid, HCl, SO₂, SO₃; gasförmige Oxidationsmittel, wie zum Beispiel Sauerstoff; Wasserstoff und/oder polymerisierbare Gase, wie zum Beispiel Ethylen und/oder Propylen. Die Zahl der sich in der Gasphase befindlichen Teilchen dieser Gase kann durch Absorption, Adsorption oder durch chemische Umsetzung auf einfache Weise verringert werden.

Ein saueres Gas, vorzugsweise Kohlendioxid, welches bei Normalbedingungen, d.h. 20°C und 1013 mbar, zunächst in gasförmiger Form in der Isolationsschicht des Bauteils vorhanden sein kann, kann vorzugsweise mit einer basischen Substanz reagieren. Dementsprechend kann das Mittel zur Verringerung des Gasdruckes als Wirksubstanz eine basische Substanz umfassen, die Kohlendioxid absorbieren oder adsorbieren kann. Basische Substanzen, die mit Kohlendioxid beispielsweise zu Carbonaten oder Hydrogencarbonaten reagieren können, sind Oxide und Hydroxide, die vorzugsweise von Alkali- und/oder Erdalkalimetallen gebildet werden. Konkrete Ausführungsformen sind unter anderen NaOH, KOH, Na₂O, K₂O, CaO, Ca(OH)₂, MgO und/oder Mg(OH)₂. Weiterhin können Amine, die bei Raumtemperatur flüssig oder fest sind, zur Absorption oder Adsorption eines saueren Gases, insbesondere von Kohlendioxid, SO₂, SO₃ oder HCl eingesetzt werden. Bezüglich der zuvor genannten Amine sind insbesondere auch Anionenaustauscher zu nennen, die in der OH⁻-Form vorliegen, sowie Polymere, die Aminogruppen aufweisen. Diese Verbindungen können einzeln oder als Mischungen eingesetzt werden, die zwei oder mehr Komponenten enthalten können.

Das molare Verhältnis von sauerem Gas, vorzugsweise Kohlendioxid, zu basischer Substanz, vorzugsweise NaOH, KOH, Na₂O, K₂O, CaO, Ca(OH)₂, MgO und/oder Mg(OH)₂, kann in einem weiten Bereich liegen. Um einen besonders geringen Gasdruck nach der Aktivierung des Mittels zur Verminderung des Gasdruckes zu erreichen, kann ein hoher Überschuss an basischer Substanz verwendet werden. Dementsprechend kann das molare Verhältnis von sauerem Gas, vorzugsweise Kohlendioxid, zu basischer Substanz, vorzugsweise NaOH, KOH, Na₂O, K₂O, CaO, Ca(OH)₂, MgO und/oder Mg(OH)₂, im Bereich von 1:1 bis 1:100, besonders bevorzugt 1:2 bis 1:10 und besonders bevorzugt 1:3 bis 1:5 liegen.

Besondere Vorteile zeigen überraschend Wirksubstanzen, insbesondere basische Wirksubstanzen, wie NaOH, KOH, Na₂O, K₂O, CaO, Ca(OH)₂, MgO und/oder Mg(OH)₂, die auf einem Trägermaterial aufgebracht sind. So können bevorzugt anorganische poröse Trägermaterialien, wie zum Beispiel Oxide des Aluminiums und/oder des Siliciums eingesetzt werden. Derartige Träger sind unter anderem in CA-A-2438438 dargelegt. Bevorzugt können Molekularsiebe, beispielsweise Silicoalumophosphate, aktives Aluminiumoxid, Kieselgur, Zeolithe und/oder Kieselgele als anorganischer Träger eingesetzt werden. Diese Stoffe sind unter anderem in Römpp Chemie Lexikon 2. Auflage auf CD-ROM beschrieben und kommerziell beispielsweise von Evonik Degussa GmbH erhältlich. Durch diese Ausgestaltung kann überraschend eine sehr hohe Druckverminderung bei relativ geringem Einsatz an basischer Wirksubstanz erzielt werden. Weiterhin zeigen diese Systeme eine sehr gute Steuerbarkeit der durch die mit der Druckabsenkung gegebenenfalls auftretenden Wärmeentwicklung.

Das unbeladene anorganische und / oder organische poröse Trägermaterial weißt bevorzugt eine DBP-Absorption (gemäß DIN 53601; DBP: Dibutylphthalat) von mindestens 180 g/100 g auf. Die für DBP zugänglichen Poren sind auch für die Wirksubstanz und die gegebenenfalls eingesetzten Stoffe eines Schutzsystems, hierin auch Hüllsubstanz genannt, zugänglich, daher ist eine hohe DBP wichtig, um eine hohe Beladung der Poren des Trägers mit Wirksubstanz und Schutzstoff bzw. Poren zu erreichen. Somit kann eine zu niedrige DBP-Aufnahme je nach Wirksubstanz ineffektiv sein, da zu viel Trägermaterial verwendet werden muss. Die DBP-Aufnahme des Trägermaterials liegt vorzugsweise im Bereich von 180 bis 600 g/(100g), besonders bevorzugt von 180 bis 500 g / (100g), ganz besonders bevorzugt von 200 bis 500 g / (100g) und insbesondere bevorzugt von 240 bis 500 g / (100g), ganz besonders bevorzugt 240 bis 400 g/(100g) und speziell bevorzugt 240 bis 350 g/(100g).

Die geträgerten Wirksubstanzen können beispielsweise dadurch erhalten werden, dass die Wirksubstanz in einem geeigneten Lösungsmittel, beispielsweise Alkohol oder Wasser gelöst und nach bekannten Verfahren in den porösen Träger eingebracht wird. Hierbei kann die Menge an Lösung so gewählt werden, dass der poröse Träger die gesamte Lösung aufnehmen kann, so dass zunächst ein rieselfähiges Zwischenprodukt erhalten werden kann. In einem weiteren Schritt wird das so erhaltene Zwischenprodukt getrocknet, um das Lösungsmittel aus dem porösen Träger zu entfernen. Nach dem Trocknungsschritt können die zuvor dargelegten Schritte des Einbringens und Trocknens wiederholt werden, um den Beladungsgrad des Systems, d.h. den Anteil an Wirksubstanz zu erhöhen.

Die Mischintensitäten und die Dosierung im Verfahren können gemäß einer bevorzugten Ausführungsform so aufeinander abgestimmt sein, dass die Rieselfähigkeit am Ende des Einbringungsvorgangs gewährleistet ist, d.h. dass zu jeder Zeit im Mischer ein rieselfähiges Pulver vorliegt. Dadurch kann überraschend erreicht werden, dass die Hüll- bzw. Wirksubstanz vollständig in die Poren aufgenommen wird und nicht an der äußeren Trägeroberfläche haftet. Wird zu schnell zudosiert oder zu wenig intensiv gemischt, kann es zu ungleichmäßigen Beladungen der Partikel kommen, was schließlich dazu führen kann, dass die Poren einiger Partikel vollständig mit Wirksubstanz gefüllt sind und keine Hüllsubstanz mehr eindringen kann. In diesem Zusammenhang sollte auch darauf geachtet werden, dass die Rührorgane, z. B. Firma IKA Duplex Mischorgan im Messkneter H60, so gewählt werden, dass durch Scherbeanspruchung nur ein geringer Abrieb stattfindet. Die Überprüfung auf Abrieb an den Partikeln erfolgt durch Messung der Partikelgrößenverteilung. Dazu werden in der später verwendeten Mischeinheit die Trägermaterialien vorgelegt und der Mischvorgang entsprechend dem späteren Vorgehen gestartet. Nach einer definierten Mischzeit werden Proben gezogen und die Partikelgrößenverteilung bestimmt. Bei der Partikelgrößenverteilung sollte die Abweichung vom d₅₀-Wert der Ausgangsprobe nicht größer als 5 % betragen.

Überraschende Vorteile können insbesondere durch geträgerte Wirksubstanzen erzielt werden, bei denen das Gewichtsverhältnis von Wirksubstanz zu Träger im Bereich von 100:1 bis 1:10, besonders bevorzugt 10:1 bis 1:1 liegt.

Überraschend kann der Gasdruck auf besonders geringe Werte minimiert werden, falls die zuvor dargelegten Amine, Oxide und/oder Hydroxide in Kombination mit Trocknungsmitteln eingesetzt werden, wie zum Beispiel Zeolithe, Molekularsiebe, hydrophile Kieselsäuren (z.B. getrocknete Aerosil®-Typen von Evonik Degussa GmbH), und andere bekannte Trocknungsmittel wie P₂O₅, Kalziumoxid (CaO), Kalziumchlorid (CaCl₂), Lithiumbromid (LiBr) und Superabsorber (Polymere mit stark polaren Seitengruppen, z.B. Favor® von Evonik Stockhausen GmbH) in getrockneter Form.

Das Gewichtsverhältnis von basischer Substanz zu Trockenmittel kann vorzugsweise im Bereich von 1:10 bis 100:1, besonders bevorzugt im Bereich von 1:2 bis 10:1 liegen. Gemäß einer weiteren Ausgestaltung der vorliegenden Erfindung kann das Gewichtsverhältnis von basischer Substanz zu Trockenmittel bevorzugt zwischen 1:100 und 20:1, besonders bevorzugt zwischen 1:10 und 2:1 betragen.

Gemäß einer besonderen Ausgestaltung der vorliegenden Erfindung kann das Trockenmittel in einem Bereich innerhalb der Hülle des Bauteils vorgesehen sein, der relativ kalt ist. Dementsprechend kann das Trockenmittel an einem Ort innerhalb oder außerhalb der Isolationsschicht an- oder aufgebracht werden, welcher eine Temperatur aufweist, die kleiner als der arithmetische Mittelwert ist, der durch das Temperaturmaximum und das Temperaturminimum gebildet wird.

Hinsichtlich eines basischen Gases, insbesondere Ammoniak, sei ausgeführt, dass dieses beispielsweise mit einer festen oder flüssigen Säure, insbesondere einem festen Ionenaustauscher in protonierter Form als Wirksubstanz umgesetzt werden kann.

Gemäß einem besonderen Aspekt kann ein oxidierendes Gas, beispielsweise Sauerstoff, durch geeignete feste oder flüssige Reduktionsmittel, wie zum Beispiel feinteilige und dadurch pyrophore Metalle (z.B. pyrophores Eisen), Halbmetalle (z.B. pyrophores Silizium) und andere pyrophore Stoffe, die als Wirksubstanz vorgesehen sind, auf einfache Weise umgesetzt und damit aus der Gasphase entfernt werden.

Gemäß einer weiteren Ausführungsform kann Wasserstoff in der Isolationsschicht enthalten sein, welcher nach einer Aktivierung des Mittels zur Verringerung des Gasdruckes aus der Gasphase der Isolationsschicht entfernt werden kann. In dieser Ausführungsform kann das Mittel zur Verringerung des Gasdruckes als Wirksubstanz ein Metall und/oder eine Legierung umfassen, welche(s) Wasserstoff adsorbieren oder absorbieren kann. Bevorzugte Ausführungsformen dieser Variante sind beispielsweise in EP 347 367 dargelegt, wobei die in EP-0 347 367 A1, eingereicht am 01.06.89 beim Europäischen Patentamt mit der Anmeldenummer 89730135.4 dargelegten Wasserstoff absorbierenden Verbindungen in diese Anmeldung zu Offenbarungszwecken eingefügt werden. Geeignete Metalle und/oder Metalllegierungen umfassen beispielsweise Vanadium, Eisen, Aluminium, Titan und/oder Nickel.

Darüber hinaus können polare Gase, wie zum Beispiel CO₂, NH₃, SO₂, NO, CO, durch ionische Flüssigkeiten absorbiert werden, die vorzugsweise auf porösen Trägern fixiert sind. Ionische Flüssigkeiten sind z.B. lieferbar und optimal anpassbar hinsichtlich Absorptionsgleichgewichtslagen von der Firma Solvent Innovation in Köln, geeignete Träger können Kieselsäuren sein (z.B. Aerosil®- und Sipernat®-Typen der Evonik Degussa GmbH), ebenso wie hydrophile Alumina-Typen (von diversen Herstellern).

In einer weiteren Ausgestaltung kann Wasser oder eine andere bei Raumtemperatur flüssige Verbindung, die leicht verdampft werden kann, wie zum Beispiel Methanol oder Ethanol, eingesetzt werden. Hierbei können diese Verbindungen vor dem Auslösen des Aktivierungsmechanismus verdampft werden, wobei das entstehende Gas, beispielsweise Wasserdampf oder Methanolgas, die anderen Gase verdrängt. Hierbei kann auch ein mechanisches Vakuum angelegt werden, welches durch Pumpen erzeugt wird. Nach Verdrängung anderer Gase kann das System verschlossen werden, wonach das Mittel zur Verringerung des Gasdruckes aktiviert werden kann. Das Mittel zur Verringerung des Gasdruckes kann in dieser speziellen Form beispielsweise in Form von Trocknungsmitteln realisiert werden, die nach einer Aktivierung, beispielsweise durch Aufbrechen einer Verkapselung den in der Isolationsschicht befindlichen Dampf absorbieren, wodurch eine Absenkung des Gasdruckes in der Isolationsschicht erzielt wird.

Zu den bevorzugten Trocknungsmitteln gehören unter anderem Zeolithe, Molekularsiebe, hydrophile Kieselsäuren (z.B. getrocknete Aerosil®-Typen von Evonik Degussa GmbH), und andere bekannte Trocknungsmittel wie P₂O₅, Kalziumoxid (CaO), Kalziumchlorid (CaCl₂), Lithiumbromid (LiBr) und Superabsorber (Polymere mit stark polaren Seitengruppen, z.B. Favor® von Evonik Stockhausen GmbH) in getrockneter Form, etc. Das Mittel zur Verringerung des Gasdruckes, insbesondere Trocknungsmittel kann hierbei, wie zuvor beschrieben, in einem Bereich innerhalb der Hülle des Bauteils vorgesehen sein, der relativ kalt ist, um eine optimale Absorptionsleistung zu erzielen. Diese Ausführungsform ist für alle Ausgestaltungen zweckmäßig, bei denen die Ad- oder Absorptionsleistung der Wirksubstanz innerhalb des vorgesehenen Bereichs der Einsatztemperatur des Vakuumisolationssystems stark temperaturabhängig ist.

Darüber hinaus kann die Isolationsschicht zunächst eine oder mehrere polymerisierbare Verbindungen enthalten, die bei Normalbedingungen gasförmig sind. Zu diesen gehören beispielsweise Propylen und/oder Ethylen. Die polymerisierbare Verbindung kann durch eine Polymerisationsreaktion in eine feste oder flüssige Substanz überführt werden. Gemäß dieser weiteren Abwandlung der Erfindung kann das Mittel zur Verringerung des Gasdruckes als Wirksubstanz ein oder mehrere Polymerisationskatalysatoren und/oder Polymerisationsinitiatoren umfassen.

Geeignete Polymerisationsinitiatoren sind beispielsweise Radikale bildende Verbindungen. Zu den verwendbaren Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, tert-Butylperoctoat, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Beispiele für geeignete Polymerisationskatalysatoren sind unter anderem Ziegler-Natta-Katalysatoren oder Metallocen-Katalysatoren, die unter anderem in Ullmanns' Encyclopedia of Industrial Chemistry, Sixth Edition dargelegt sind.

Von besonderem Interesse sind insbesondere Wirksubstanzen oder Mittel zur Verminderung des Gasdruckes die partikelförmig vorliegen. Vorzugsweise zeigen diese Partikel einen Durchmesser im Bereich von 1 µm bis 10 mm, besonders bevorzugt 10 µm bis 5 mm und besonders bevorzugt 0,1 mm bis 3 mm. Diese Werte beziehen sich auf den d₅₀-Wert (50 % der Teilchen sind kleiner, 50% der Teilchen sind größer) und können durch mikroskopische Methoden bestimmt werden.

Vor dem Aktivieren des Mittels zur Verringerung des Gasdruckes kann das sich in der Isolationsschicht befindliche Gas durch Pumpen zumindest teilweise entfernt werden. Gemäß einer bevorzugten Ausführungsform der vorliegenden Erfindung ist das Mittel zur Verringerung des Gasdruckes so ausgestaltet, dass ein relativ hoher Gasdruck allein durch die hierin beschriebenen Mechanismen auf sehr niedrige Werte verringert werden kann, ohne dass mechanische Pumpen eingesetzt werden müssten. Diese Ausgestaltung kann unter anderem durch die Menge an Wirksubstanz erzielt werden, die eingesetzt wird, bezogen auf die Menge an Gas in der Isolationsschicht. Hierdurch kann mechanisches Pumpen entfallen, welches mit einem hohen Energieaufwand verbunden ist. Weiterhin können unter anderem Fehler bei der Inbetriebnahme des Vakuumisolationssystems vermieden werden.

Gemäß diesem besonderen Aspekt der vorliegenden Erfindung beträgt der Gasdruck in der Isolationsschicht vor dem Aktivieren des Mittels zur Verringerung des Gasdruckes mindestens 500 mbar, besonders bevorzugt mindestens 800 mbar und ganz besonders bevorzugt mindestens 950 mbar.

Dieser Gasdruck ist im Wesentlichen durch das in der Isolationsschicht befindliche Gas bedingt, welches durch das Mittel zur Verringerung des Gasdrucks absorbiert und/oder adsorbiert wird und/oder mit diesem reagiert, so dass nach dem Aktiveren ein sehr geringer Gasdruck erzielt werden kann. Gemäß einer besonderen Ausgestaltung der vorliegenden Erfindung kann das Gas in der Isolationsschicht mindestens 80 Vol.-%, besonders bevorzugt mindestens 90 Vol.-% und ganz besonders bevorzugt mindestens 95 Vol.-% an Kohlendioxid aufweisen. Von besonderem Interesse sind hierbei insbesondere Ausführungsformen, bei denen das Gas in der Isolationsschicht mindestens 98 Vol.-%, besonders bevorzugt mindestens 99 Vol.-% und ganz besonders bevorzugt mindestens 99,5 Vol.-% an Kohlendioxid aufweist.

Durch die Verwendung eines reaktionsfähigen Gases, bevorzugt eines saueren Gases, insbesondere von Kohlendioxid in der Isolationsschicht des Bauteils gelingt es überraschend, ein System bereitzustellen, durch das auf kostengünstige und sichere Weise ein Vakuum erzeugt werden kann, ohne dass mechanische Pumpen eingesetzt werden müssten. Weiterhin kann dieses System eine lange Zeit gelagert werden, ohne dass besondere Vorkehrungen getroffen werden müssten. Darüber hinaus kann das Vakuumisolationssystem auf besonders einfache und sichere Weise in Betrieb genommen werden, ohne dass aufwendige Sicherheitsvorkehrungen getroffen werden müssten.

Vorzugsweise kann das Mittel zur Verringerung des Gasdruckes den zunächst in der Isolationsschicht befindlichen Druck auf Werte kleiner oder gleich 500 mbar, besonders bevorzugt kleiner oder gleich 50 mbar, speziell bevorzugt kleiner oder gleich 10 mbar und ganz besonders bevorzugt kleiner oder gleich 1 mbar absenken. Hierdurch wird die Wärmeleitfähigkeit des Systems stark verringert. Diese Werte können durch die Art und die Menge des Mittels zur Verringerung des Gasdruckes erzielt werden.

Gemäß einem besonderen Aspekt der vorliegenden Erfindung kann die Geschwindigkeit dieser Vorgänge, die zur Verringerung der Molzahl der sich in der Gasphase befindlichen Moleküle führen, gesteuert werden, so dass eine lokale Überhitzung vermieden werden kann. Beispielsweise kann das Mittel zur Verringerung des Gasdruckes über das Bauteil fein verteilt vorliegen, so dass die gegebenenfalls entstehende Reaktionswärme über ein großes Volumen verteilt entsteht. Darüber hinaus kann auch eine Trennschicht vorgesehen sein, die zwar in einem bestimmten, von der jeweiligen Reaktion abhängigen Maß gasdurchlässig ist, jedoch den unmittelbaren Kontakt zwischen Gas und Mittel zur Verringerung des Gasdruckes begrenzt.

Erfindungsgemäß ist das Mittel zur Verringerung des Gasdruckes aktivierbar ausgestaltet. Der Ausdruck "aktivierbar ausgestaltet" bedeutet im Rahmen der Erfindung, dass das Mittel zur Verringerung des Gasdruckes erst nach einem Auslösen eines Aktivierungsmechanismus den Gasdruck, der zunächst in der Isolationsschicht besteht, verringert. Der Aktivierungsmechanismus kann von dem Vorgang, der zur Absenkung des Gasdruckes führt, unterschieden werden. Hierbei wird der Aktivierungsmechanismus durch eine oder mehrere Einwirkungen ausgelöst, die nach dem gasdichten Verschließen der Hülle erfolgen, die die Isolationsschicht umschließt. Durch die hierdurch mögliche Entkoppelung der Aktivierung von dem Vorgang, der zur Absenkung des Gasdruckes führt, ist keine dauerhafte Einwirkung notwendig, um den Gasdruck niedrig halten zu können. Die zur Auslösung des Aktivierungsmechanismus bzw. zur Verringerung des Gasdruckes eingesetzte Einwirkung muss daher nicht dauerhaft erfolgen, sondern kann nach der Aktivierung, die spätestens mit dem Erreichen des vorgesehenen Evakuierungsdruckes abgeschlossen ist, unterbleiben, ohne dass der Gasdruck wesentlich ansteigt. Diese Entkoppelung, die insbesondere nach der Aktivierung in Erscheinung tritt, ist im Stand der Technik nicht beschrieben. Daher müssen die zur Absenkung des Gasdruckes eingesetzten Einwirkungen, die gemäß dem Stand der Technik erfolgen, im Gegensatz hierzu über die Zeit beibehalten werden, über die das Vakuum aufrecht erhalten werden soll. Vorzugsweise ist der vorgesehene Aktivierungsmechanismus des Mittels zur Absenkung des Gasdruckes daher irreversibel, d.h. unumkehrbar. Bei dem Verfahren gemäß EP 347 367 besteht diese Einwirkung darin, dass der Gegenstand bei Raumtemperatur gehalten wird. Bei einem Erhitzen auf die Temperatur, bei der der Gegenstand verschlossen wurde, zeigt das System deutlich erhöhten Druck, in der Regel Normaldruck, so dass die Isolationswirkung verringert wird. Nachteilig ist hierbei die hohe Temperatur, die notwendig ist, um bei einem Abkühlen ein Vakuum zu erhalten. Vorgänge, die gemäß dem Stand der Technik auf einem Ausfrieren beruhen, benötigen ein Fluid, dass bei tiefen Temperaturen durch die Leitung geleitet wird. Andernfalls wird keine Absenkung des Gasdruckes erzielt.

Beispielsweise kann das Mittel zur Verringerung des Gasdruckes mechanisch, chemisch, elektrisch, thermisch und/oder durch Bestrahlung mit elektromagnetischen Wellen aktivierbar sein. D.h. durch mechanische, chemische, elektrische und/oder thermische Einwirkung bzw. durch Bestrahlung mit elektromagnetischen Wellen kann ein Vorgang ausgelöst werden, der zu einer Verringerung des Gasdruckes in der Isolationsschicht führt.

Beispiele für konkrete Ausgestaltungen für einen Auslösemechanismus sind Hüllsubstanzen, die durch Wärme, durch mechanische, elektrische oder chemische Einwirkung oder durch Bestrahlung verändert werden können. Diese Hüllsubstanzen können die zuvor dargelegten Wirksubstanzen, die ebenfalls im Mittel zur Verringerung des Gasdruckes vorgesehen sind, verkapseln.

Beispielsweise können Teile des Isolationsverbundes, z.B. durch Beginn der Förderung cryogener Medien durch das zu isolierende Bauteil abgekühlt werden, wodurch aktive Spezies durch Schrumpfung und/oder Versprödung einer Verkapselung freigesetzt werden, woraufhin die gasmolzahl-verringernden Vorgänge innerhalb der Isolation unter Mitwirkung der freigesetzten aktiven Spezies starten.

Diese Ausführungsform kann unter anderem durch Stoffe unterstützt werden, die einen zur Umhüllung unterschiedlichen Wärmeausdehnungskoeffizienten aufweisen, so dass bei einer Abkühlung Spannungsrisse in der Hüllsubstanz oder der Verkapselung entstehen, durch die Vorgänge ermöglicht werden, die zu einer Druckabsenkung führen. Beispielsweise dehnt sich Wasser bei sinkenden Temperaturen unterhalb von 4°C aus, wohingegen sich andere Substanzen in diesem Bereich zusammenziehen. Dieser Mechanismus kann allgemein angewandt werden, so dass sich innerhalb der Verkapselung ein Material befinden kann, dass sich bei einer Abkühlung weniger stark zusammenzieht als das Material, aus dem die Verkapselung, hierin auch als Hüllsubstanz bezeichnet, aufgebaut ist. Hierdurch können auf bzw. innerhalb einer Verkapselung Spannungen erzeugt werden, die zu einer Zerstörung der Kapselhülle führen. Dieser Mechanismus kann allein oder in Zusammenwirkung mit weiteren Mechanismen, beispielsweise einer Versprödung der Hüllsubstanz angewandt werden.

Weiterhin können Teile des Isolationsverbundes, z.B. durch Beginn der Förderung heißer Medien durch das zu isolierende Bauteil, durch elektrische Aufheizung von in oder an den Isolationsverbund integrierte elektrische Heizelemente, Aufheizung von Bestandteilen des Isolationsverbundes mittels Mikrowellenstrahlung oder magnetischer oder elektrischer Wechselfelder aufgeheizt werden, wodurch Hüllsubstanzen schmelzen, verspröden, abgebaut werden oder auf sonstige Weise Ihre Barriereeigenschaften verlieren.

Die Heizelemente können beispielsweise als Widerstandsheizung ausgestaltet sein, wobei die Heizelemente besonders bevorzugt an den Rändern der Isolationsschicht angebracht werden, um die Isolationswirkung der Isolationsschicht nicht negativ zu beeinflussen. Selbstverständlich können die Mittel zum Aufheizen, insbesondere die Heizelemente auch außerhalb der Hülle des Vakuumisolationssystems vorgesehen sein, wobei eine Aufheizung des gesamten Isolationssystems oder eines definierten Bereichs davon erzielt werden kann. Dies kann beispielsweise durch Heißluftgebläse erfolgen.

Eine gezielte Erwärmung kann des Weiteren durch Stoffe erzielt werden, die sich bei Einwirkung bestimmter elektromagnetischer Felder (z.B. Mikrowellen, wechselnde Magnetfelder o.ä.) oder Ultraschall aufheizen lassen. Ein Beispiel für solcherart nutzbare Stoffe sind die unter dem Handelsnamen "MagSilica®" von der Evonik Degussa GmbH vertriebenen Silica-Partikel mit Beladungen von magnetisierbaren Metallen, insbesondere mit Eisen-Beladungen.

Diese Stoffe können in der Umgebung der Substanzen, die zu einer Verringerung des Gasdruckes führen, hierin auch als Wirksubstanzen bezeichnet, oder in der Umgebung oder als Komponente einer Hüllsubstanz vorgesehen sein, die ggf. eine Wirksubstanz umhüllt, so dass bei Einwirkung der entsprechenden elektromagnetischer Felder oder Ultraschall eine sehr lokale Erwärmung erzielt werden kann, die zu einer Aktivierung des Mittels zur Absenkung des Gasdruckes führt.

Neben einem Schmelzen der Umhüllung kann diese auch dadurch zerstört werden, dass innerhalb der Verkapselung ein Stoff mit einer starken Wärmeausdehnung, der ggf. auch verdampft werden kann, vorgesehen ist. Durch die Wärmeausdehnung kann die Verkapselung aufgebrochen werden. Beispielsweise kann Wasser innerhalb einer Verkapselung vorgesehen sein. Der durch das Verdampfen des Wassers erzeugte Druck kann zur Zerstörung der Verkapselung eingesetzt werden. Weiterhin kann ein Metall mit einem hohen Wärmeausdehnungskoeffizienten innerhalb einer Verkapselung, die beispielsweise aus einem Kunststoff oder einem anorganischen Glas, beispielsweise Silikatglas ausgebildet ist, vorgesehen sein. Durch die im Vergleich zur Hüllsubstanz starke Wärmeausdehnung des Metalls kann die Verkapselung durch Erwärmen zerstört werden.

Das durch die zuvor dargelegten Mechanismen freigesetzte Wasser kann beispielsweise durch Trocknungsmittel der Gasphase wieder entzogen werden, um einen ausreichend niedrigen Gasdruck zu erzielen.

Darüber hinaus können Teile des Isolationsverbundes, z.B. durch Beginn der Förderung heißer Medien durch das zu isolierende Bauteil, durch elektrische Aufheizung von in oder an den Isolationsverbund integrierte elektrische Heizelemente oder Hitzeeinwirkungen von außerhalb des Isolationssystems aufgeheizt werden, wodurch die für eine chemische Reaktion (z.B. Zersetzungsreaktion zur Bildung aktiver Spezies, oder aber die direkte gasmolzahl-verringernde Reaktion vorhandener Spezies miteinander) benötigte Aktivierungsenergie zur Verfügung gestellt wird. Ähnliche Aufheizungen von Bestandteilen des Isolationsverbundes können mittels Mikrowellenstrahlung oder magnetischer oder elektrischer Wechselfelder etc. in den bereits beschriebenen Weisen erzielt werden.

Weiterhin können diese Vorgänge dadurch angestoßen werden, dass der Isolationsverbund ausreichend tief eindringender oder durchdringender ionisierender Strahlung ausgesetzt wird, wodurch chemische Prozesse wie Bildung von Radikalen oder reaktiven ionischen Spezies initiiert werden, welche wiederum die gewünschten gasmolzahl-verringernden Reaktionen starten.

Gemäß einer weiteren Ausgestaltung der vorliegenden Erfindung kann durch direkte Einwirkung von Mikrowellenstrahlung auf bestimmte Stoffe im Isolationsverbund, welche die Fähigkeit besitzen die Strahlungsenergie zu absorbieren und sich damit stark aufzuheizen, eine Aktivierung erfolgen. Durch die Aufheizung können diese oder benachbarte Stoffe chemisch oder physikalisch aktiviert werden; z.B. durch Zersetzung/Zerstörung von Einkapselungen, Aktivierung von Katalysatoren, Bildung von Radikalen oder reaktiven ionischen Spezies etc., woraufhin die gasmolzahl-verringernden Vorgänge innerhalb der Isolation unter Mitwirkung der aktiven Spezies starten.

Ferner können magnetische oder elektrische Felder auf bestimmte Stoffe im Isolationsverbund einwirken, wodurch diese chemisch oder physikalisch aktiviert werden; z.B. Versetzung in mechanische Bewegungen (Schwingungen), wodurch Einkapselungen aufgebrochen werden oder Feststoffkomponenten aneinander reiben (Reaktionsauslösung durch Friktion), oder z.B. induktive Aufheizung von metallhaltigen Hilfsstoffen, woraufhin die gasmolzahl-verringernden Vorgänge innerhalb der Isolation unter Mitwirkung der freigesetzten und/oder aktivierten Spezies starten.

Weiterhin können mechanische Einwirkungen auf den fertig installierten Isolationsverbund erfolgen, um die zu aktivierenden Stoffe, z.B. durch Bruch von spröden Kapseln, die insbesondere aus anorganischem Glas hergestellt werden können, Zerreiben von nach außen hin passivierten oder eingekapselten Partikeln o.ä., freizusetzen. Geeignete Maßnahmen um dies zu erreichen können u.a. sein: Einwirkung von Ultraschall durch außen angelegte Sonotroden, Walken der äußersten Umhüllung um den Isolationsverbund bei der Verlegung/Installation, Aufblasen einer hohlen Umhüllung um den Isolationsverbund oder in dieses eingebrachte Schläuche o.ä. (und damit Pressung auf den Isolationsverbund), etc., woraufhin die Verkapselung aufgebrochen wird und eine Druckabsenkung erfolgt.

Viele der oben genannten Auslösemechanismen basieren auf der Umhüllung einer oder mehrerer zumeist fester oder flüssiger Stoffe, welche bei freiem Kontakt mit dem Füllgas spontan einen physiko-chemischen Vorgang eingehen, durch den die Molzahl des Gases verringert wird. Durch eine Umhüllung wird dementsprechend das Mittel zur Verringerung des Gasdruckes aktivierbar ausgestaltet, so dass eine Steuerung der Auslösung des gasmolzahlverringernden Vorganges erzielt werden kann. Die Umhüllung unterbindet zunächst diesen ansonsten spontanen Vorgang und erlaubt so die einfache Herstellung des gesamten Isolationsverbundes bei Atmosphärendruck-Bedingungen oder jedenfalls höheren Gasdrücken, als sie im fertigen funktionstüchtigen Isolationsverbund zur Erreichung einer gewünschten Isolationswirkung erforderlich wären.

Beispielsweise kann das Mittel zur Verringerung des Gasdruckes dadurch aktivierbar ausgestaltet sein, dass eine Hüllsubstanz vorgesehen ist, die eine basische Substanz, einen Polymerisationskatalysator bzw. Polymerisationsinitiator oder ein Metall und/oder eine Metalllegierung umgibt. Durch das Betätigen eines Auslösemechanismus verändern sich die Barriereeigenschaften der durch die Hüllsubstanz gebildeten Hülle derart, dass die zuvor dargelegten Vorgänge (z.B. Reaktionen, Absorptionen oder Adsorptionen) mit der Folge einer Verringerung des Gasdruckes in der Isolationsschicht eintreten können.

Die durch die Hüllsubstanz um die Wirksubstanz gebildete Hülle weist gemäß einer bevorzugten Abwandlung der vorliegenden Erfindung eine möglichst geringe Gasdurchlässigkeit auf, um so eine lange Lagerfähigkeit des Bauteils zur Herstellung eines Vakuumisolationssystems sicherzustellen. Die Gasdurchlässigkeit ist von der Art des Hüllmaterials und der Dicke der Hülle abhängig, wobei eine dickere Hülle im Allgemeinen zu einer geringeren Gasdurchlässigkeit führt. Allerdings ist die genaue Gasdurchlässigkeit von der Art der Anwendung und der vorgesehenen Lagerdauer abhängig. Für viele Anwendungen kann die Hülle eine relativ hohe Gasdurchlässigkeit aufweisen. So genügen vielfach Mittel zur Verringerung des Gasdruckes den Anforderungen, die vor der Aktivierung eine Druckverminderung um höchstens 5% nach einer Beobachtungszeit von mindestens 2 Stunden unter dem zur Reaktion vorgesehenen Gas zeigen. Vorzugsweise beträgt die Druckverminderung höchstens 2% und besonders bevorzugt höchstens 1% nach einer Beobachtungszeit von mindestens 2 Stunden. Diese Werte werden bei 25°C gemessen, wobei das Mittel zur Verringerung des Gasdruckes nicht aktiviert wurde. Der Ausgangsgasdruck beträgt hierbei 1000 mbar, wobei das Gas mindestens 99,5 Vol.-% an dem zur Reaktion vorgesehenen Gas aufweist.

Dieser Wert bezieht sich hierbei auf das sich in der Isolationsschicht befindliche Gas, welches nach der Aktivierung des Mittels zur Verringerung des Gasdruckes durch dieses absorbiert und/oder adsorbiert wird und/oder mit diesem reagiert. Vorzugsweise wird ein saueres Gas, insbesondere Kohlendioxid eingesetzt, so dass sich diese Werte insbesondere auf die Durchlässigkeit für Kohlendioxid beziehen.

Durch die Aktivierung des Mittels zur Verringerung des Gasdruckes wird die durch die Hüllsubstanz um die Wirksubstanz gebildete Hülle gasdurchlässig. In diesem Zusammenhang sei darauf verwiesen, dass hierbei diese Hülle auch vollständig zerstört werden kann. Nach dem Aktivieren steigt die Durchlässigkeit der um die Wirksubstanz möglicherweise vorhandenen Hülle. So beträgt die Druckverminderung nach der Aktivierung mindestens 10% nach einer Zeit von mindestens 2 Stunden, bezogen auf den Ausgangsgasdruck vor der Aktivierung. Der Zeitraum von 2 Stunden bezieht sich hierbei auf den Startzeitpunkt der Aktivierung. Vorzugsweise beträgt die Druckverminderung mindestens 20% und besonders bevorzugt mindestens 50% nach einer Zeit von mindestens 2 Stunden. Zur Bestimmung dieser Werte beträgt der Ausgangsgasdruck hierbei vorzugsweise mindestens 900 mbar, wobei das sich vor der Aktivierung in der Isolationsschicht befindliche Gas mindestens 99,5 Vol.-% an dem zur Reaktion vorgesehenen Gas, vorzugsweise einem saueren Gas, besonders bevorzugt Kohlendioxid aufweist. Die Drücke beziehen sich hierbei vorzugsweise auf eine Temperatur von 25°C.

Gemäß einer besonderen Abwandlung kann die über die Druckverminderung gegebene Gasdurchlässigkeit der Hülle des Mittels zur Verringerung des Gasdruckes nach der Aktivierung sehr stark zunehmen. So beträgt der Quotient aus der Druckverminderung nach der Aktivierung und der Druckverminderung vor der Aktivierung mindestens 2, besonders bevorzugt mindestens 10 und ganz besonders bevorzugt mindestens 100, bezogen auf das sich zuvor in der Isolationsschicht befindliche Gas und einer Beobachtungszeit von jeweils mindestens 2 Stunden, wobei die Druckangaben jeweils auf eine Temperatur von 25°C bezogen sind.

Die Hüllsubstanz kann beispielsweise ein Wachs oder eine andere Substanz sein, die durch Erwärmen schmilzt, so dass die Hülle abgebaut und, beispielsweise die zuvor mit dem Wachs umhüllte basische Substanz mit dem Kohlendioxid reagieren kann. Bevorzugte Substanzen, die als Hüllsubstanz eingesetzt werden können, zeigen eine Schmelztemperatur im Bereich von 30 bis 150°, besonders bevorzugt im Bereich von 50° bis 70°C. Zu den Hüllsubstanzen zählen Wachse, Paraffine, Fette, Öle, Fettalkohole, Fettsäuren, Gum Acacia, Gum Arabicum, Polyethylenglykole und deren CoPolymere, sowie Mischungen von zwei oder mehreren dieser Klassen. Beispiele für solche Hüllsubstanzen sind: Stearinsäure (Schmelzpunkt ca. 70°C), Palmitin- und Margarinsäure (Schmelzpunkte um 62°C), alle Typen von Vestowax® (Schmelzpunkte ca. 90-120°C, Hersteller Evonik Tego GmbH), Palmfett (Schmelzpunkt ca. 27-45°C), Bienenwachs (Schmelzpunkt 62-65°C), Carnaubawachs (Schmelzpunkt 80-87°C), Wollwachs (Lanolin, Schmelzpunkt ab ca. 40°C), Ceresin (Schmelzpunkt ca. 62-80°C). Alle genannten Fettsäuren, Fette und natürlichen Wachse sind von einer Vielzahl an Herstellern erhältlich. Paraffinwachse sind u.a. von den Firmen Sasol, Shell, sowie fast allen anderen mineralölverarbeitenden Unternehmen unter einer Vielzahl an Handelsnamen erhältlich.

Bei Hüllen, deren Aktivierungsmechanismus ein Schmelzen einer Hüllsubstanz umfasst, kann es zweckmäßig sein, dass über den gesamten Druckverminderungsvorgang soviel Energie, insbesondere Wärme zugeführt wird, dass die Hüllsubstanz keine neue Hülle um die Wirksubstanz bildet, bevor der Druck nicht auf den vorgesehenen Wert abgesenkt wurde. Bei Verwendung von Mitteln zur Verringerung des Gasdruckes, deren Aktivierungsmechanismus ein Schmelzen einer Hüllsubstanz umfasst, können überraschende Vorteile dadurch erzielt werden, dass diese Mittel mit Substanzen gemischt werden, die geschmolzene Hüllsubstanz aufnehmen können. Zu diesen Substanzen zählen insbesondere poröse Materialien, wie zum Beispiel die zuvor dargelegten porösen anorganischen Trägermaterialien. Falls derartige Substanzen eingesetzt werden, kann das Gewichtsverhältnis von Mittel zur Verringerung des Gasdruckes zu Substanz, die geschmolzene Hüllsubstanz aufnehmen kann, im Bereich von 100:1 bis 1:100, vorzugsweise 10:1 bis 1:10 und besonders bevorzugt im Bereich von 2:1 bis 1:2 liegen. Von Interesse sind hierbei insbesondere Ausführungsformen, bei denen das Mittel zur Verringerung des Gasdruckes und die Substanz, die geschmolzene Hüllsubstanz aufnehmen kann, jeweils partikelförmig ausgebildet und fein vermischt sind.

Weiterhin kann beispielsweise eine Hüllsubstanz durch Kälte versprödet werden, so dass hierdurch die, beispielsweise für eine basische Substanz, gebildete Hülle zerstört wird. Diese Zerstörung der Hülle kann beispielsweise durch mechanische Einwirkung, die zuvor beispielhaft dargestellt wurde, unterstützt werden. Beispiele für Stoffe, die verspröden sind insbesondere Kunststoffe, aber auch viele Wachse und Fette, sowie Proteine und aus diesen aufgebaute Stoffe zeigen diese Eigenschaft. Die Versprödung kann vorzugsweise bei einer Temperatur im Bereich von unterhalb 20°C, besonders bevorzugt im Bereich von unterhalb 5°C, ganz besonders bevorzugt im Bereich von unterhalb -30°C erzielt werden.

Das Gewichtsverhältnis von Hüllsubstanz und Wirksubstanz kann in einem weiten Bereich liegen, falls die Aktivierbarkeit durch die Verwendung einer Hülle erzielt wird. Je dicker die Hülle, desto geringer ist im Allgemeinen die Gasdurchlässigkeit, falls weitere Faktoren, wie zum Beispiel die Art des Hüllmaterials außer Acht gelassen werden. Andererseits kann eine sehr dicke Hülle unter Umständen zu Problemen hinsichtlich der Aktivierbarkeit führen, da die Gasdichtheit der Hülle beim Aktivieren signifikant verringert werden muss. Für viele Zwecke sind daher Mittel zur Verminderung des Gasdruckes zweckmäßig bei denen das Gewichtsverhältnis von Wirksubstanz zu Hüllsubstanz im Bereich von 50:1 bis 1:10, vorzugsweise 10:1 bis 1:1 und besonders bevorzugt 5:1 bis 2:1 liegt, falls das Mittel zur Verminderung des Gasdruckes eine Hüllsubstanz aufweist.

Nach einer besonderen Ausführungsform weist das Mittel zur Verminderung des Gasdrucks eine Hülle auf. Diese Verkapselung der Wirksubstanz kann beispielsweise durch eine Matrixverkapselung und/oder eine Kern-Hülle-Verkapselung erfolgen. Die Herstellung von Systemen, die sich durch eine Umhüllung bzw. Verkapselung auszeichnen ist im Stand der Technik weithin bekannt. Hierzu sind verschiedene Methoden, insbesondere Koazervation, RESS-, GAS- und/oder PGSS-Verfahren sowie Prozesse unter Verwendung von Koaxialdüsen, Sprühtrocknung, Wirbelschichtcoating sowie Mikroverkapselung geeignet. Weiterhin können bei Verwendung von porösen Trägermaterialien die mit Wirksubstanz gefüllten Poren verschlossen werden. Das Verschließen der Poren mit einer Hüllsubstanz kann auf ähnliche Weise erfolgen, wie das Beladen des porösen Trägermaterials mit Wirksubstanz.

Hinsichtlich der Polymerisationskatalysatoren bzw. Polymerisationsinitiatoren ist festzuhalten, dass die Halbwertszeit vieler Radikalbildner von der Temperatur abhängig ist. Daher kann das Mittel zur Verringerung des Gasdruckes auch aus einem Polymerisationskatalysator bzw. Polymerisationsinitiator bestehen, der gezielt unter Bildung von Radikalen erwärmt wird, wobei die gebildeten Radikale das in der Isolationsschicht enthaltene polymerisierbare Gas polymerisieren. Die Halbwertszeiten der zuvor dargelegten Initiatoren bei unterschiedlichen Temperaturen sind bekannt. Eine Erwärmung auf entsprechend hohe Temperaturen führt üblich zu einer ausreichend hohen Anzahl an Radikalen, um die beschriebenen Polymerisationsreaktionen auszulösen, welche wiederum zu einer Druckabsenkung führen.

Vielfach ist der vorgesehene Aktivierungsmechanismus des Mittels zur Absenkung des Gasdruckes irreversibel. Gemäß einem bevorzugten Aspekt der vorliegenden Erfindung kann das Bauteil mehrere Mittel zur Verringerung des Gasdruckes aufweisen, die durch unterschiedliche Mechanismen oder durch unterschiedliche Einwirkungen gezielt aktiviert werden können. Durch diese Ausgestaltung ist es möglich, den Vorgang der Druckabsenkung wiederholt ausführen zu können. Dies kann sinnvoll sein, um beispielsweise nach einer Wartung, Reparatur oder ähnlichem ein Vakuum erneut durch die zuvor beschriebenen Vorgänge, d.h. Reaktionen, Absorptionen oder Adsorptionen, bilden zu können. In diesen Ausgestaltungen kann die Isolationsschicht des überprüften oder reparierten Isolationssystems zunächst mit einem entsprechenden Gas gespült werden, welches nach einem gasdichten Verschließens der Isolationsschicht auf die zuvor beschriebene Weise durch chemische oder physikalische Vorgänge aus der Isolationsschicht umgesetzt, absorbiert oder adsorbiert wird.

Gemäß einer weiteren Abwandlung, bei der verschiedene Mittel zur Verringerung des Gasdruckes eingesetzt werden, die durch unterschiedliche Mechanismen oder durch unterschiedliche Einwirkungen gezielt aktiviert werden können, kann beispielsweise eine zu starke lokale Erwärmung dadurch vermieden werden, dass zunächst nur relativ geringe Mengen an Wirksubstanz mit dem sich in der Isolationsschicht befindlichen Gas umgesetzt werden. In weiteren Schritten werden, nach einer entsprechenden Abkühlung, weitere Mittel zur Verringerung des Gasdruckes aktiviert.

Weiterhin kann durch diese Ausgestaltung, die mehrere unterschiedliche Mittel zur Verringerung des Gasdruckes aufweist, ein niedriger Gasdruck über einen sehr langen Zeitraum sichergestellt werden. Hierbei können sich die Mittel zur Verringerung des Gasdruckes in der Wirksubstanz unterscheiden. So kann in einem ersten Schritt ein Hauptteil des sich in der Isolationsschicht befindlichen Gases, insbesondere eines saueren Gases, vorzugsweise Kohlendioxid, mit einer ersten Wirksubstanz, vorzugsweise einer basischen Substanz umgesetzt werden, um so einen sehr geringen Gasdruck zu erzielen. Dieser Gasdruck kann vorzugsweise höchstens 50 mbar, besonders bevorzugt höchstens 10 mbar und ganz besonders bevorzugt höchstens 1 mbar betragen.

In einem späteren Schritt können Reste an Sauerstoff, Stickstoff oder anderen Gasen als Kohlendioxid, die sich in der Isolationsschicht befinden können, durch weitere Wirksubstanzen gebunden werden. Die Isolationsschicht kann diese Gase vor der Aktivierung zu einem geringen Anteil enthalten. Dementsprechend kann zur Herstellung des vorliegenden Bauteils auch ein saueres Gas, insbesondere Kohlendioxid eingesetzt werden, dass einen relativ geringen Reinheitsgrad aufweist. Der Anteil an Edelgasen, insbesondere an Argon in der Isolationsschicht beträgt bevorzugt höchstens 0,1 Vol.-%, besonders bevorzugt höchstens 0,01 Vol.-% und ganz besonders bevorzugt höchstens 0,001 Vol.-%. Übliches technisches Kohlendioxid weist einen sehr geringen Gehalt an Edelgasen auf. Weiterhin können sich Gase, wie zum Beispiel Sauerstoff oder Stickstoff nach einer Zeit in der Isolationsschicht aufgrund von Diffusion anreichern. Das weitere Mittel zur Verringerung des Gasdruckes kann als Wirksubstanz beispielsweise Lithium oder eine andere Substanz umfassen, welche diese Gase, insbesondere Stickstoff oder Sauerstoff bindet. Durch diese Ausgestaltung können daher auf besonders effiziente Weise Vakuumisolationssysteme mit einer hervorragenden Leistungsfähigkeit erhalten werden. Dementsprechend zeichnen sich besonders bevorzugte Systeme dadurch aus, dass mindestens zwei Mittel zur Verringerung des Gasdruckes vorhanden sind, die sich durch die Aktivierbarkeit und die Wirksubstanz unterscheiden.

Demgemäß können bevorzugte Abwandlungen mindestens zwei unterschiedliche Mittel zur Verringerung des Gasdruckes umfassen, wobei sich diese bevorzugt in der Wirksubstanz unterscheiden können. Hierbei sind insbesondere Abwandlungen von Interesse, die neben einer basischen Substanz eine weitere Wirksubstanz, beispielsweise eine Substanz, die Stickstoff oder Sauerstoff bindet, umfassen. Besondere Vorteile können überraschend dadurch erzielt werden, dass das Gewichtsverhältnis von basischen Substanzen zu anderen Wirksubstanzen, die vorzugsweise Stickstoff oder Sauerstoff binden, bevorzugt im Bereich von 10000:1 bis 10:1, besonders bevorzugt im Bereich von 1000:1 bis 50:1 liegt.

Das erfindungsgemäße Bauteil dient insbesondere zur Herstellung von Vakuumisolationssystemen. Der Begriff Vakuumisolationssystem beschreibt ein wärmeisoliertes System, dessen Isolationsleistung durch Vakuum verbessert wird. Vakuum bedeutet in diesem Zusammenhang, dass im Isolationsmaterial ein Absolutdruck vorhanden ist, der vorzugsweise kleiner oder gleich 500 mbar, besonders bevorzugt kleiner oder gleich 50 mbar, speziell bevorzugt kleiner oder gleich 10 mbar und ganz besonders bevorzugt kleiner oder gleich 1 mbar ist. Hierdurch wird die Wärmeleitfähigkeit des Isolationsmaterials stark verringert.

Bevorzugte Vakuumisolationssysteme dienen insbesondere zum Transport von kalten Fluiden, insbesondere Flüssigkeiten, die vorzugsweise eine Temperatur von höchstens -40°C, besonders bevorzugt höchstens -100°C und ganz besonders bevorzugt -150°C oder weniger aufweisen.

Neben kalten Fluiden kann ein erfindungsgemäßes Leitungssystem auch dazu dienen heiße Fluide, d.h. Fluide, die eine Temperatur oberhalb der Raumtemperatur von ca. 25°C aufweisen, zu transportieren. Bevorzugt weisen heiße Fuide eine Temperatur von mindestens 50°C, besonders bevorzugt mindestens 80°C auf.

Die zuvor beschriebenen, bevorzugten Leitungssysteme umfassen mindestens eine Leitung oder einen Leitungsverbund, in der bzw. in dem ein Fluid transportiert werden kann.

Der Begriff Leitungsverbund bezeichnet im Rahmen der vorliegenden Erfindung ein System, das mindestens zwei unterschiedliche Leitungen umfasst. So kann der Leitungsverbund beispielsweise mindestens zwei Innenleitungen aufweisen, die Flüssigkeiten oder Gase transportieren können. Daneben kann der Leitungsverbund auch mindestens eine Innenleitung für den Transport von Flüssigkeiten und/oder Gasen und mindestens eine Datenund/oder Stromleitung umfassen. Besonders bevorzugte Leitungsverbünde umfassen mindestens zwei Innenleitungen für einen Stofftransport und mindestens eine Daten- und/oder Stromleitung.

Im Allgemeinen umfassen diese Leitungen oder Leitungsverbünde mindestens eine Innenleitung und einen Außenmantel, wobei das kalte oder heiße Fluid durch die Innenleitung geleitet wird und der Außenmantel die Leitung gegenüber der Umgebung abschließt, so dass sich zwischen der Innenleitung und dem Außenmantel ein Vakuum ausbilden kann. Dementsprechend dient der Außenmantel insbesondere zum Erhalt der Dämmwirkung.

Zur Verbesserung der Barriereeigenschaften kann der Außenmantel mit einer Metallschicht versehen werden. Diese Metallschicht kann beispielsweise durch Aufdampfen von Metall, durch einen metallhaltigen Lack oder durch eine Metallfolie aufgebracht werden. Dies kann an der äußeren Oberfläche, an der Innenoberfläche oder beidseitig erfolgen.

Durch entsprechende Materialauswahl kann die Leitung bzw. der Leitungsverbund des Vakuumssystems bei Raumtemperatur biegsam ausgestaltet werden. Die Materialien, insbesondere zur Herstellung der Innenleitung bzw. des Außenmantels sind allgemein bekannt, wobei diese insbesondere in den zuvor dargelegten Druckschriften aufgeführt sind. Vorzugsweise kann die Leitung bzw. der Leitungsverbund eines erfindungsgemäßen Isolationssystems zulässige Biegeradien von weniger als 20 m, besonders bevorzugt weniger als 10 m, insbesondere bevorzugt weniger als 5 m und ganz besonders bevorzugt weniger als 1,5 m aufweisen. Der Biegeradius ergibt sich aus der maximalen Krümmung, die ohne Beschädigung der Leitung bzw. des Leitungsverbundes erzielt werden kann. Beschädigung bedeutet, dass das System den Anforderungen nicht mehr genügt.

Neben den zuvor beschriebenen Leitungsverbünden, die insbesondere zur Übertragung von kalten oder heißen Fluiden, also Gasen oder Flüssigkeiten dienen, können die erfindungsgemäßen Bauteile vielfältig eingesetzt werden.

Beispielsweise kann das erfindungsgemäße Bauteil auf dem Gebiet der Fernwärme-, Prozessdampf- und sonstige Wärmeträgersysteme, zur Isolation von Gebäuden, in der Gebäudetechnik, zur Isolierung von Rohrleitungen, die heißes Leitungswassers sowie Wasser für Heizungszwecke führen, im Bau von Reaktoren und Apparaten, die insbesondere für industrielle Zwecke eingesetzt werden, zur Herstellung von PCM-Speichern, Transportmitteln, insbesondere Kühlfahrzeugen Flugzeugen, oder in anderen Anwendungen der Kälte- oder Wärmetechnik eingesetzt werden. Aufgrund der relativ geringen Kosten, der guten Verarbeitbarkeit und Handhabbarkeit kann das Bauteil hierbei vielfältig eingesetzt werden. So können beispielsweise Kühlschränke und Gefriertruhen auf einfache Weise hergestellt werden, wobei auch komplexe Formen sicher und einfach isoliert werden können, ohne dass lange Taktzeiten bei der Herstellung in Kauf genommen werden müssten.

Nachfolgend soll die vorliegende Erfindung anhand von Beispielen näher erläutert werden, ohne dass hierdurch eine Beschränkung derselben erfolgen soll.

### Beispiel 1

Der nachfolgende Versuch zeigt, dass eine Druckabsenkung, die durch CO₂-Absorption an NaOH erzielt wurde, die Wärmeleitfähigkeit eines Isolationsmaterials verringert. Hierzu wurde ein vakuumgeeigneter, gasdichter Edelstahlbehälter eingesetzt, in dessen Innenraum ein Isolationsmaterial eingebracht werden konnte. Die Wärmeleitfähigkeit dieser Isolationsmaterialien konnte mittels Hitzdrahtmethode bestimmt werden (Referenz: Ebert H. - P., Bock V., Nilsson O., Fricke J.: The Hot-Wire Method Applied to Porous Materials of Low Thermal Conductivity. High Temp - High Press 1993 (25) 391-402).

Innerhalb des Behälters befand sich weiterhin ein zweiter gasdichter Behälter, dessen Innenvolumen 1/10 des Innenvolumens des äußeren Behälters betrug. Das Innenvolumen des inneren Behälters konnte über ein Ventil mit dem Innenvolumen des äußeren Behälters verbunden werden, so dass bei geschlossenem Ventil beide Gasräume voneinander getrennt, bei geöffnetem Ventil beide Gasräume miteinander verbunden waren. Das entsprechende Ventil konnte von außerhalb des äußeren Behälters aus bedient werden. Dementsprechend war das Mittel zur Druckabsenkung mechanisch aktivierbar.

Als Isolationsmaterial wurden in den Innenraum des äußeren Behälters Mischungen aus Kieselsäuren und Rußen (80 Massenanteile Sipernat® 22LS und 20 Massenanteile Flammruß F101®, beide von Evonik Degussa GmbH) eingebracht.

Weiterhin wurde der innere Behälter mit einer Mischung aus 1 Volumenanteil handelsüblichem zur CO₂-Absorption bestimmtem auf Inertmaterial geträgertem NaOH (Merck 101564: Natriumhydroxid auf Träger zur Elementaranalyse, Partikelgröße 1,6-3mm) und 2 Volumenanteilen Silica (z.B. Aerosil® A300 von Evonik Degussa GmbH) gefüllt.

Anschließend wurde das Ventil, welches zwischen dem inneren und dem äußeren Behälter vorgesehen war, geöffnet und der gesamte Aufbau mechanisch auf ca. 1 hPa evakuiert. Bei diesem niedrigen Druck wurde die Anordnung über 1 Stunde bei laufender Vakuumpumpe gehalten.

Danach wurde das Ventil, welches zwischen dem inneren und dem äußeren Behälter vorgesehen war, geschlossen und das Gasvolumen des äußeren Behälters mit CO₂ geflutet bis ca. 1000hPa Gesamtdruck bei Raumtemperatur erreicht wurden.

Das molare Einsatzverhältnis von NaOH im inneren Behälter zu im Isolationsraum befindlichem CO₂ betrug 4:1.

Unter einer CO₂-Atmosphäre mit einem Gesamtdruck von 1000hPa wurde bei Raumtemperatur eine Wärmeleitfähigkeit des Isolationsmaterials von 22 mW/(m*K) gemessen.

In diesem Zustand wurde das System über einen Zeitraum von 24 Stunden beobachtet. Es trat keinerlei Veränderung des Gasdruckes im äußeren Behälter auf, ebenso blieb die Wärmeleitfähigkeit des Isolationsmaterials konstant.

Anschließend wurde dann das Ventil geöffnet. Innerhalb von nur 70 Sekunden fiel der Gasdruck im äußeren Behälter von rund 1000hPa auf rund 600hPa, nach 2 Stunden wurden Werte unter 20hPa erreicht, und nach 4 Stunden schließlich unter 3hPa. Im Zuge dieser Druckabsenkung reduzierte sich auch die Wärmeleitfähigkeit des Isolationsmaterials auf 2 mW/(m*K), d.h. um mehr als 90% gegenüber dem Wert bei Standarddruck.

### Beispiel 2

Das Beispiel 1 wurde im Wesentlichen wiederholt. Allerdings wurden, anstatt der unverkapselten bzw. unverhüllten auf Inertmaterial geträgerten NaOH-Partikel, Partikel eingesetzt, die eine schmelzbare Hülle aufwiesen. Dementsprechend war das Mittel zur Absenkung des Druckes thermisch aktivierbar.

Diese Partikel wurden dadurch erhalten, dass die in Beispiel 1 dargelegten Partikel (NaOH auf inertem porösem Träger, Partikelgröße 1,6-3mm; Merck 101564: Natriumhydroxid auf Träger, zur Elementaranalyse) mit einer Stearinsäure-Schicht versehen wurden. Hierzu wurden diese Partikel (eingebrachte Gesamtmenge NaOH 6g) mit Stearinsäure (Gesamtmenge 2g) verkapselt, wobei die Stoffe hierzu gemischt und in einem Kneter bei 100°C über 2 Stunden gemischt wurden.

Die erhaltenen, thermisch aktivierbaren Partikel wurden mit 3g pulverförmigen Isoliermaterialien (Ruß, Silica, Talkum) gemischt und gasdicht eingeschlossen. Anschließend wurde das äußere Gasvolumen mit Kohlendioxid gefüllt. Hierzu wurde das Gasvolumen dreimal mit einer Pumpe auf einen Druck von weniger als 1 mbar evakuiert und mit CO₂ (99.9vol%) begast.

Nach dem Gasaustausch betrug der Gesamtgasdruck ca. 998mbar. Danach wurde der gasdichte Behälter, und somit die verkapselten Partikel, erwärmt. Nach Aufheizung des gasdichten Behälters auf mehr als 75°C trat eine stetige Druckabsenkung ein. Nach ca. 100 Minuten war der Gasdruck auf 24 mbar abgesunken. Das Experiment wurde beendet.

### Beispiel 3

Das Beispiel 2 wurde im Wesentlichen wiederholt. Allerdings wurden anstatt der zuvor dargelegten Partikel Mittel zur Absenkung des Druckes eingesetzt, die einen höheren Anteil an Hüllsubstanz aufwiesen.

Zur Herstellung der Partikel wurden 10g NaOH (wasserfrei) in 100ml Ethanol (99.8%) gelöst, danach wurden unter Rühren 20g Sipernat® 50 (Evonik Degussa GmbH) langsam zugegeben. Die erhaltene Zusammensetzung wurde über 1 Stunde homogenisiert. Anschließend wurde diese Zusammensetzung bei 70°C über 24h getrocknet, woraufhin die festen Partikel ca. 33 Gew.-% NaOH enthielten. Nachfolgend wurden diese Partikel (30g) mit 20g Paraffin (Sasolwax®6037 von Sasol) im Kneter über 2 Stunden bei 100°C gemischt, um eine Verkapselung zu erzielen.

Die erhaltenen Partikel (entsprechend 6g NaOH) wurden mit 3g pulverförmigen Isoliermaterialien (Ruß, Silica, Talkum) vermischt und in die Messanordnung aus Beispiel 1 eingebracht. Die im Behälter enthaltene Luft wurde gegen Kohlendioxid ausgetauscht. Hierzu wurde der Behälter ca. dreimal mit einer Pumpe auf einen Druck von weniger als 1 mbar evakuiert und mit CO₂ (99.9vol%) begast.

Nach dem Gasaustausch betrug der Gesamtgasdruck ca. 993 mbar. Danach wurde der gasdichte Behälter, und somit die verkapselten Partikel, erwärmt. Nach Aufheizung des gasdichten Behälters auf mehr als 90°C trat eine stetige Druckabsenkung ein.Nach ca. 90 Minuten war der Gasdruck auf 36 mbar abgesunken. Das Experiment wurde beendet.

## Patentansprüche

1. Bauteil zur Herstellung von Vakuumisolationssystemen, wobei es mindestens eine Isolationsschicht umfasst, die von einer Hülle umgeben ist, wobei der Gasdruck, der in der Isolationsschicht besteht, durch ein im Bauteil vorgesehenes Mittel verringert werden kann, und
das Mittel zur Verringerung des Gasdruckes aktivierbar in einer Form ausgestaltet ist, dass es eine Wirksubstanz umfasst, die mit einer Hüllsubstanz verkapselt ist, **dadurch gekennzeichnet, dass** die Hüllsubstanz aus der Gruppe bestehend aus Wachsen, Paraffinen, Fetten, Ölen, Fettalkoholen, Fettsäuren, Gum Acacia, Gum Arabicum, Polyethylenglykolen und deren Co- Polymeren und Mischungen von zwei oder mehreren dieser Klassen ausgewählt ist.

2. Bauteil gemäß Anspruch 1, **dadurch gekennzeichnet, dass**
das Mittel zur Verringerung des Gasdrucks ein sich in der Isolationsschicht befindliches Gas absorbiert, adsorbiert und/oder mit diesem reagiert, wobei das sich in der Isolationsschicht befindliche Gas Kohlendioxid ist und das Mittel zur Verringerung des Gasdruckes eine basische Substanz umfasst, welche das Kohlendioxid absorbieren, adsorbieren und/oder mit diesem reagieren kann.

3. Bauteil gemäß mindestens einem der vorhergehenden Ansprüche,
**dadurch gekennzeichnet, dass** das Gas in der Isolationsschicht mindestens 90 Vol.-% an Kohlendioxid aufweist.

4. Bauteil gemäß mindestens einem der vorhergehenden Ansprüche,
**dadurch gekennzeichnet, dass** der Gasdruck vor der Aktivierung mindestens 800 mbar beträgt.

5. Bauteil gemäß Anspruch 1, **dadurch gekennzeichnet, dass**
das sich in der Isolationsschicht befindliche Gas ein polymerisierbares Gas umfasst und das Mittel zur Verringerung des Gasdruckes mindestens einen Polymerisationskatalysator bzw. Polymerisationsinitiator umfasst, durch den das polymerisierbare Gas polymerisiert werden kann.

6. Bauteil gemäß mindestens einem der vorhergehenden Ansprüche, **dadurch gekennzeichnet, dass**
die Wirksubstanz auf einem Trägermaterial aufgebracht ist.

7. Vakuumisolationssystem, umfassend ein Bauteil gemäß einem der Ansprüche 1 bis 6.

8. Verwendung eines Vakuumisolationssystems gemäß Anspruch 7 zum Einsatz auf dem Gebiet der Fernwärme-, Prozessdampf bzw. sonstige Wärmeträgersysteme, der Gebäudetechnik oder zur Isolation von Gebäuden, von Reaktoren bzw. Apparaten, oder von Rohrleitungen, die heißes Leitungswasser bzw. Wasser für Heizungszwecke führen, von PCM (Phase Change Material)-Speichern, von Kühlfahrzeugen oder von Flugzeugen vorgesehen ist.

9. Verfahren zur Bildung eines Vakuums in einem Isolationssystem, umfassend ein Bauteil gemäß Anspruch 1 bis 6, wobei im Bauteil das Mittel zur Verringerung des Gasdruckes aktiviert wird.

## Claims

1. A component for producing vacuum insulation systems, which comprises at least one insulation layer which is surrounded by a casing, wherein the gas pressure in the insulation layer can be reduced by means provided in the component, and the means for reducing the gas pressure is embodified as activatable in such a shape that it comprises an active substance encapsulated by a casing substance, **characterized in that** the casing substance is selected from the group consisting of waxes, paraffins, fats, oils, fatty alcohols, fatty acids, gum acacia, gum arabic, polyethylene glycols and their copolymers, and mixtures of two or more of these classes.

2. The component according to claim 1 **characterized in that** the means for reducing the gas pressure absorbs, adsorbs and/or reacts with the gas in the insulation layer, wherein the gas in the insulation layer is carbon dioxide and the means for reducing the gas pressure comprises a basic substance capable of absorbing, adsorbing and/or reacting with carbon dioxide.

3. The component according to at least one of the preceding claims **characterized in that** the gas in the insulation layer includes at least 90% by volume of carbon dioxide.

4. The component according to at least one of the preceding claims **characterized in that** the gas pressure is at least 800 mbar before activation.

5. The component according to claim 1 **characterized in that** the gas in the insulation layer comprises an addition-polymerizable gas and the means for reducing the gas pressure comprises at least one addition polymerization catalyst/initiator whereby the addition-polymerizable gas can be addition polymerized.

6. The component according to at least one of the preceding claims **characterized in that** the active substance is applied on a carrier material.

7. A vacuum insulation system comprising a component according to one of claims 1 to 6.

8. The use of a vacuum insulation system according to claim 7 for use in the field of district heating, process steam or other heat transfer systems, building technology or for insulation of buildings, of reactors or apparatuses or of pipework lines carrying hot tap water or water for heating purposes, of PCM (Phase Change Material) stores, of refrigerated vehicles or of aircraft.

9. A process for forming a vacuum in an insulation system, comprising a component according to claims 1 to 6, wherein the means for reducing the gas pressure is activated in the component.

## Revendications

1. Composant pour fabriquer des systèmes d'isolation sous vide, qui comprend au moins une couche isolante qui est entourée par une enveloppe, la pression du gaz qui se trouve dans la couche isolante pouvant être diminuée par un moyen prévu dans le composant, et le composant pour diminuer la pression du gaz étant conçu de façon à pouvoir être activé, sous une forme telle qu'il comprenne une matière active qui est encapsulée dans une substance formant enveloppe, **caractérisé en ce que** la substance formant enveloppe est choisie dans le groupe consistant en les cires, les paraffines, les graisses, les huiles, les alcools gras, les acides gras, la gomme d'acacia, la gomme arabique, les polyéthylèneglycols et leurs copolymères, et les mélanges de deux ou plus de ces classes.

2. Composant selon la revendication 1, **caractérisé en ce que** le moyen pour diminuer la pression du gaz absorbe un gaz se trouvant par lui-même dans la couche isolante, l'adsorbe et/ou réagit avec lui, le gaz se trouvant par lui-même dans la couche isolante étant le dioxyde de carbone, et le moyen pour diminuer la pression du gaz comprenant une substance basique, qui peut absorber le dioxyde de carbone, l'adsorber et/ou réagir avec lui.

3. Composant selon au moins l'une des revendications précédentes, **caractérisé en ce que** le gaz dans la couche isolante comprend au moins 90 % en volume de dioxyde de carbone.

4. Composant selon au moins l'une des revendications précédentes, **caractérisé en ce que** la pression du gaz est, avant activation, d'au moins 800 mbar.

5. Composant selon la revendication 1, **caractérisé en ce que** le gaz se trouvant par lui-même dans la couche isolante comprend un gaz polymérisable, et le moyen pour diminuer la pression du gaz comprend au moins un catalyseur de polymérisation ou un amorceur de polymérisation grâce auquel il est possible de polymériser le gaz polymérisable.

6. Composant selon au moins l'une des revendications précédentes, **caractérisé en ce que** la matière active est appliquée sur un matériau support.

7. Système d'isolation sous vide, comprenant un composant selon l'une des revendications 1 à 6.

8. Utilisation d'un système d'isolation sous vide selon la revendication 7 pour une utilisation dans le domaine des systèmes de chaleur urbaine, de vapeur de procédé ou d'autres caloporteurs, dans la technique du bâtiment, ou pour l'isolation de bâtiments, de réacteurs ou d'appareils ou de tuyauteries qui transportent de l'eau du robinet chaude ou de l'eau destinée au chauffage, d'accumulateurs de PCM (Phase Change Material, matériaux eutectiques), de véhicules frigorifiques ou d'avions.

9. Procédé de formation d'un vide dans un système d'isolation, comprenant un composant selon les revendications 1 à 6, le moyen pour diminuer la pression du gaz étant activé dans le composant.
